(19) Europäisches Patentamt / European Patent Office / Office européen des brevets

(11) **EP 2 905 364 A1**

(12) **EUROPEAN PATENT APPLICATION**
published in accordance with Art. 153(4) EPC

(43) Date of publication:
**12.08.2015 Bulletin 2015/33**

(51) Int Cl.:
***D01F 9/22*** (2006.01)

(21) Application number: **12886114.3**

(22) Date of filing: **26.12.2012**

(86) International application number:
**PCT/JP2012/083741**

(87) International publication number:
**WO 2014/054196 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.10.2012 JP 2012221267**

(71) Applicant: **Mitsubishi Rayon Co., Ltd.**
**Tokyo 100-8253 (JP)**

(72) Inventors:
• **SAKO, Yoshihiro**
**Otake-shi**
**Hiroshima 739-0693 (JP)**
• **NAKAO, Hiroyuki**
**Otake-shi**
**Hiroshima 739-0693 (JP)**
• **KOTANI, Tomoyuki**
**Otake-shi**
**Hiroshima 739-0693 (JP)**

• **TOKORO, Yasuhito**
**Otake-shi**
**Hiroshima 739-0693 (JP)**
• **TATEGAKI, Hiroshi**
**Toyohashi-shi**
**Aichi 440-8601 (JP)**
• **KOGAME, Akiyoshi**
**Otake-shi**
**Hiroshima 739-0693 (JP)**
• **SUMIYA, Kazunori**
**Otake-shi**
**Hiroshima 739-0693 (JP)**
• **HIRANO, Kenji**
**Otake-shi**
**Hiroshima 739-0693 (JP)**

(74) Representative: **Reitstötter Kinzebach**
**Patentanwälte**
**Sternwartstrasse 4**
**81679 München (DE)**

(54) **FLAME-PROOFED FIBER BUNDLE, CARBON FIBER BUNDLE, AND PROCESSES FOR PRODUCING THESE**

(57) [Problem] To efficiently and inexpensively provide a flame-resistant fiber bundle having high performance and high quality and a carbon fiber bundle which is obtained using the flame-resistant fiber bundle. [Solution] A process for producing a flame-resistant fiber bundle, the process comprising a step in which a flame-resistant fiber bundle (1) having a single-fiber density $\rho_{F1}$ of 1.26 g/cm$^3$ to 1.36 g/cm$^3$ is brought into contact sequentially with a heater group having a surface temperature $T_H$ of 240°C to 400°C under the following conditions (A), (B), and (C) to obtain a flame-resistant fiber bundle (2) having a single-fiber density $\rho_{F2}$ of 1.33 g/cm$^3$ to 1.43 g/cm$^3$: (A) the heater $H_{n+1}$ with which the fiber bundle is brought into contact "n+1"-thly has a highter temperature than the heater $H_n$ with which the fiber bundle is brought into contact "n"-thly; (B) the total contact time between the fiber bundle and the heater group is 10 seconds to 360 seconds; and (C) the contact time between the fiber bundle and each heater is 2 seconds to 20 seconds. A flame-resistant fiber bundle configured by a single fiber group having a single-fiber fineness of 0.8 dTex to 5.0 dTex, wherein an average density of a single fiber is 1.33 g/cm$^3$ to 1.43 g/cm$^3$, and a variation coefficient CV of the density in the fiber bundle is 0.2% or less.

EP 2 905 364 A1

DEFINITION OF PARAMETERS OF KIDNEY CROSS-SECTIONAL SHAPE

LENGTH OF MAJOR AXIS: a

LENGTH OF MINOR AXIS: b

GROOVE DEPTH: c

ASPECT RATIO: a/b

# FIG. 1

**Description**

TECHNICAL FIELD

The present invention relates to an acrylic flame-resistant fiber bundle, a carbon fiber bundle, and processes for producing these.

BACKGROUND ART

Since carbon fibers are excellent in specific strength and specific elasticity, the carbon fibers are widely used in various fields including sport application such as a golf club or a fishing rod, leisure application, or aircraft application. In recent years, in addition to these applications, the carbon fibers are being developed to be applied to a so-called general industrial use such as materials for windmills, materials for automobiles, CNG tanks, aseismic reinforcement of buildings, or materials for ships. According to this development, there is a demand for a process for effectively producing a higher-quality carbon fiber.

Industrially, the carbon fiber is produced through a stabilization process of heat-treating a precursor fiber in air of 200 to 300°C and a carbonization step of heat-treating the precursor fiber in an inert atmosphere having a temperature of 1000°C or higher.

The carbon content of polyacrylonitrile which is most commonly used as a precursor fiber is about 68% by mass, and the yield of the carbon fiber (hereinafter, referred to as the "carbonization yield") is about 68% by mass based on the precursor fiber even when the ideal case is considered. In the industrial production process, since desorption of carbon atoms also occurs, the carbonization yield is actually around 50% by mass. Due to such a low carbonization yield, the proportion of the raw material cost in the production cost of the carbon fiber is large, and thus in order to reduce the production cost of the carbon fiber, it is important how to reduce the raw material cost.

Further, in order to reduce the production cost of the carbon fiber, it is also important how to reduce the facility investment and the utility cost. In general, treatment for a long time is necessary in the stabilization process. Therefore, in order to reduce the production cost of the carbon fiber, it is important how to effectively perform the stabilization step.

In recent years, reduction of the production cost is carried out by increasing the total fineness of the carbon fiber bundle. However, as the total fineness increases, unevenness of the stabilization is generated in a short stabilization time. Therefore, in the stabilization process, it is desirable that the unevenness of the stabilization be reduced by performing the treatment for a long time. According to this, in the entire production step of the carbon fiber, the proportion of the facility investment and the utility cost in the stabilization process increases. In order to reduce the production cost of the carbon fiber, it is important how to effectively perform the stabilization process. In order to effectively perform the stabilization process, it is not sufficient to simply shorten the treatment time but it is desirable to improve the production efficiency with respect to the facility investment and the utility cost in the stabilization process.

As a method of the stabilization treatment, hitherto, there have been known an atmosphere heating method of heating a precursor fiber bundle under a heated atmosphere and a heater contacting method of heating a precursor fiber bundle by bringing it into contact with a heater. However, in the atmosphere heating method, there is a problem in that heat-transfer efficiency is low and energy consumption is large. On the other hand, in the heater contacting method, heat-transfer efficiency is high but unevenness of the stabilization tends to be great. In a case where the treatment is performed for a long time, there is a problem in that the facility investment and the utility cost increase.

As a means for improving these problems, Patent Document 1 suggests a technique in which a precursor fiber is heated in an oxidizing atmosphere having a temperature of 200 to 300°C, and subsequently the precursor fiber is repeatedly and intermittently brought into contact with a surface of a heater, the temperature of which is 220 to 400°C.

Further, as another means, for example, Patent Document 2 describes a method in which an acrylonitrile precursor fiber bundle having a total fineness of 3,000 denier is subjected to (1) preliminary oxidation treatment in an oxidizing atmosphere having a temperature of 200°C or higher but lower than 300°C (desirably, 250°C or higher but lower than 300°C) until a C. I. value becomes 0.10 or more but less than 0.20, subsequently is subjected to (2) oxidation treatment by repeatedly and intermittently bringing the acrylonitrile precursor fiber bundle into contact with a heater that has been heated to 250 to 350°C until the C. I. value becomes 0.35 or more, and is further subjected to (3) heating treatment in an oxidizing atmosphere having a temperature of 250 to 350°C such that the C. I. value becomes 0.50 or more.

CITATION LIST

PATENT DOCUMENT

Patent Document 1: JP 59-30914 A
Patent Document 2: JP 61-167023 A

SUMMARY OF THE INVENTION

PROBLEM TO BE SOLVED BY THE INVENTION

However, although the stabilization method described in Patent Document 1 is effective in shortening the stabilization time and preventing the fiber bundle from being fused, in a case where the treatment time in the heater contacting method is 5 minutes, a time required for the atmosphere heating treatment to be previously performed is 180 minutes, that is, a significantly long time. On the other hand, in a case where the time for the atmosphere heating treatment is shortened to 20 to 30 minutes, a time required for the heater contacting treatment is 9 minutes or longer. Moreover, since the time for which the fiber bundle is brought into contact with a heater is 1 second or shorter per one contact, the progress of the stabilization is slow and thus the facility investment cost and the utility cost are large. Therefore, it is hard to say that this method is an effective process for producing a carbon fiber.

Further, a method described in Patent Document 2 is a process for producing a flame-resistant fiber. This method is effective to the production of a flame-resistant fiber. However, in a case where a carbon fiber is effectively produced, the carbonization treatment further needs to be performed in a relatively shorter time. This stabilization treatment method is excellent in terms of the fact that the stabilization can be effectively performed. However, when the fiber bundle in which the stabilization reaction does not proceed is brought into contact with a high-temperature roll, there is a problem in that the fiber bundle is fused.

From these viewpoints, in order to effectively produce a carbon fiber bundle using a carbon-fiber-precursor acrylic fiber bundle as a raw material, it is necessary to optimize the production process in consideration of influence of respective steps and treatment methods on the raw material cost, the facility investment, and the utility cost. There is a demand for a process for effectively producing a high-quality carbon fiber by selecting an optimum treatment method.

An object of the invention is to provide a process for producing a flame-resistant fiber bundle and a process for producing a carbon fiber bundle in order to effectively produce a high-quality acrylic carbon fiber bundle. Further, another object of the invention is to provide a flame-resistant fiber bundle and a carbon fiber bundle which have high quality.

MEANS FOR SOLVING PROBLEM

The present inventors found that a flame-resistant fiber bundle and a carbon fiber bundle which have high quality can be effectively produced, and thus completed the following inventions [1] to [20].

[1] A flame-resistant fiber bundle configured by a single fiber group having a single-fiber fineness of 0.8 dTex to 5.0 dTex, in which an average density of a single fiber is 1.33 $g/cm^3$ to 1.43 $g/cm^3$, and a variation coefficient CV of the density in the fiber bundle is 0.2% or less.

[2] The flame-resistant fiber bundle described in the above item [1], the fiber bundle configured by a group of single fibers each having a kidney-type cross-sectional shape in which a length of major axis a is 10 $\mu$m to 32 $\mu$m, a length of minor axis b is 6 $\mu$m to 20 $\mu$m, a groove depth c is 0.1 $\mu$m to 3.0 $\mu$m, and an aspect ratio a/b is 1.3 to 1.8.

[3] The flame-resistant fiber bundle described in the above item [1], in which a degree of orientation $\pi$ (20 = 25° peak), which is obtainable by wide-angle X-ray analysis, is 68% to 74%, a ratio "A/S x 100%" of an area A at the spectrum peak in the vicinity of 135 ppm, which is obtainable by solid state $^{13}$C-NMR, to the whole spectrum area S is 14% to 17%.

[4] A carbon fiber bundle configured by a group of carbon fibers each having a kidney-type cross-sectional shape in which a length of major axis a is 5 $\mu$m to 16 $\mu$m, a length of minor axis b is 3 $\mu$m to 10 $\mu$m, a groove depth c is 0.70 $\mu$m to 3 $\mu$m, and an aspect ratio a/b is 1.3 to 1.8.

[5] A process for producing a flame-resistant fiber bundle, the process including a step in which a flame-resistant fiber bundle (1) having a single-fiber density $\rho_{F1}$ of 1.26 $g/cm^3$ to 1.36 $g/cm^3$ is brought into contact sequentially with a heater group having a surface temperature $T_H$ of 240°C to 400°C under the following conditions (A), (B), and (C) to obtain a flame-resistant fiber bundle (2) having a single-fiber density $\rho_{F2}$ of 1.33 $g/cm^3$ to 1.43 $g/cm^3$:

[(A) when the surface temperature of the heater $H_n$ with which the fiber bundle is brought into contact "n"-thly is designated as $T_{Hn}$ (°C), and the surface temperature of the heater $H_{n+1}$ with which the fiber bundle is brought into contact "n+1"-thly is designated as $T_{Hn+1}$ (°C), the expression "$T_{Hn} < T_{Hn+1}$" is established, with the proviso that n is an integer of 1 or more;
(B) the total contact time between the fiber bundle and the heater group is 10 seconds to 360 seconds; and
(C) the contact time between the fiber bundle and each heater is 2 seconds to 20 seconds.]

[6] The process for producing a flame-resistant fiber bundle described in the above item [5], in which a flame-resistant fiber bundle obtained by heating a carbon-fiber-precursor acrylic fiber bundle in an oxidizing atmosphere having a temperature of 200°C to 300°C for 25 minutes or longer is used as the flame-resistant fiber bundle (1).

[7] The process for producing a flame-resistant fiber bundle described in the above item [5] or [6], in which, in the step of obtaining the flame-resistant fiber bundle (2), a numerical value of a surface temperature $T_{H1}$ (°C) of the heater with which the fiber bundle is brought into contact firstly and a numerical value of a contact time $t_1$ (sec) between the fiber bundle and the heater satisfy the following expression (1).

$$T_{H1} \leq 420 - 7 \times t_1 \cdots (1)$$

[8] The process for producing a flame-resistant fiber bundle described in the above item [5] or [6], in which the heater group is a heating roll.

[9] The process for producing a flame-resistant fiber bundle described in the above item [8], in which, in the step of obtaining the flame-resistant fiber bundle (2), a ratio "$V_L/V_1$" of a rotation speed $V_1$ of the heating roll with which the fiber bundle is brought into contact firstly to a rotation speed $V_L$ of the heating roll with which the fiber bundle is brought into contact lastly is 1.01 to 1.20.

[10] The process for producing a flame-resistant fiber bundle described in the above item [8], in which the tension of the fiber bundle between the "n"-th heating roll and the "n+1"-th heating roll is 0.05 cN/dTex or more.

[11] The process for producing a flame-resistant fiber bundle described in the above item [5] or [6], in which, in the step of obtaining the flame-resistant fiber bundle (2), the fiber bundle which has passed through the heater $H_n$ having a surface temperature of $T_{Hn}$ (°C) is brought into contact with gas having a temperature $T_G$ (°C) satisfying the condition of the following expression (3).

$$100 \leq T_{Hn} - T_G \cdots (3)$$

[12] The process for producing a flame-resistant fiber bundle described in the above item [5] or [6], in which air is introduced into a oxidation oven from the lower position in relation to the installation position of each heater of the heater group installed in the oxidation oven.

[13] The process for producing a flame-resistant fiber bundle described in the above item [5] or [6], in which a numerical value of the single-fiber density $\rho_{F1}$ (g/cm$^3$) and a numerical value of the contact time $t_1$ (sec) satisfy the following expression (4).

$$1.8 \leq (\rho_{F1} - 1.21) \times t_1 \leq 7.2 \cdots (4)$$

[14] The process for producing a flame-resistant fiber bundle described in the above item [5] or [6], in which the surface temperature $T_{H1}$ is 240°C to 320°C.

[15] The process for producing a flame-resistant fiber bundle described in the above item [5] or [6], in which a surface temperature $T_{HL}$ of the heater with which the fiber bundle is brought into contact lastly is 330°C to 400°C.

[16] The process for producing a flame-resistant fiber bundle described in the above item [5] or [6], in which, in the step of obtaining the flame-resistant fiber bundle (2), the surface temperature $T_{HL}$ of the heater with which the fiber bundle is brought into contact lastly is 280°C to 330°C, and a step in which the flame-resistant fiber bundle (2) is heated in an oxidizing atmosphere having a temperature of 250°C to 300°C to obtain a flame-resistant fiber bundle (3) having a single-fiber density $\rho_{F3}$ of 1.35 g/cm$^3$ to 1.43 g/cm$^3$ is included after the step of obtaining the flame-resistant fiber bundle (2).

[17] The process for producing a flame-resistant fiber bundle described in the above item [5] or [6], in which the step of obtaining the flame-resistant fiber bundle (2) includes the following three steps:

(1) a step in which the single-fiber density of the flame-resistant fiber bundle is adjusted to 1.30 to 1.38 g/cm$^3$ by oxidation treatment using a heater group 1 having a surface temperature of 240°C to 290°C;
(2) a step performed subsequent to the step (1) in which the single-fiber density of the flame-resistant fiber bundle is adjusted to 1.32 g/cm$^3$ to 1.40 g/cm$^3$ by oxidation treatment using a heater group 2 having a surface temperature of 260°C to 330°C; and
(3) a step performed subsequent to the step (2) in which the single-fiber density of the flame-resistant fiber bundle is adjusted to 1.34 g/cm$^3$ to 1.42 g/cm$^3$ by oxidation treatment using a heater group 3 having a surface temperature of 280°C to 400°C.

[18] The process for producing a flame-resistant fiber bundle described in the above item [5] or [6], in which the single-fiber fineness of the acrylic precursor fiber bundle is 0.8 dTex to 5.0 dTex and the total fineness is 3,000 dTex to 100,000 dTex.

[19] A process for producing a carbon fiber bundle, the process comprising a step in which the flame-resistant fiber bundle (2) obtained by the process for producing a flame-resistant fiber bundle described in the above item [5] or [6] is heated in an inert atmosphere having a highest temperature of 1200°C to 2000°C.

[20] A process for producing a carbon fiber bundle, the process comprising a step in which a flame-resistant fiber bundle (3) obtained by the process for producing a flame-resistant fiber bundle described in the above item [16] is heated in an inert atmosphere having a highest temperature of 1200°C to 2000°C.

EFFECT OF THE INVENTION

According to the process for producing a flame-resistant fiber bundle of the invention, it is possible to effectively provide a high-quality flame-resistant fiber bundle. Further, according to the process for producing a carbon fiber bundle of the invention, it is possible to effectively provide a high-quality carbon fiber bundle. According to the flame-resistant fiber bundle of the invention, it is possible to provide a flame-resistant fiber product (for example, a fire-retardant cloth and flame-resistant curtain) that is excellent in workability and is cheap with high quality, and a carbon fiber bundle that is excellent in workability and is cheap with high quality. According to the carbon fiber bundle of the invention, it is possible to provide a composite material product that is excellent in workability and is cheap with high quality, and an intermediate product thereof.

BRIEF DESCRIPTION OF DRAWINGS

Fig. 1 is a schematic view illustrating a cross-section of a fiber having a kidney-type cross-sectional shape.
Fig. 2 is a schematic view illustrating a definition of a blackening degree in a single fiber cross-section of a flame-resistant fiber bundle.
Fig. 3 is a diagram showing a solid state $^{13}$C-NMR spectrum of the flame-resistant fiber bundle of the invention.

MODE(S) FOR CARRYING OUT THE INVENTION

Hereinafter, the invention of a process for producing a flame-resistant fiber bundle, the invention of a flame-resistant fiber bundle, the invention of a process for producing a carbon fiber bundle, and the invention of a carbon fiber bundle will be described in order.

The invention of a process for producing a flame-resistant fiber bundle includes the inventions of "Process a," "Process b," and the like to be described below. "Process a" is a production process in which a flame-resistant fiber bundle (1) having a predetermined density is brought into contact with a heater to improve the degree of flameproofness of a flame-resistant fiber bundle (2). "Process b" is a production process in which, first, an carbon-fiber-precursor acrylic fiber bundle is heated in an oxidizing atmosphere having a predetermined temperature to produce a flame-resistant fiber bundle (1) having a predetermined density, and subsequently, the flame-resistant fiber bundle (1) is brought into contact with a heater to further improve the degree of flameproofness of a flame-resistant fiber bundle (2). That is, "Process b" is a process in which, first, the flame-resistant fiber bundle (1) is produced by a preliminary stabilization process and subsequently, the same step as in "Process a" is performed.

Hereinafter, a step of producing the flame-resistant fiber bundle (1) is referred to as a "first stabilization process." Further, a step of producing the flame-resistant fiber bundle (2) from the flame-resistant fiber bundle (1) is referred to as a "second stabilization process."

Incidentally, after the "second stabilization process," as necessary, a "third stabilization process" is further performed.

<Acrylic Precursor Fiber Bundle>

In the process for producing a flame-resistant fiber bundle of the invention (first stabilization process), a carbon-fiber-precursor acrylic fiber bundle (hereinafter, referred to as the "precursor fiber bundle" in some cases) is used. In the invention, as polymers constituting the precursor fiber bundle, an acrylic copolymer composed of 90 mol% or more of an acrylonitrile unit and 10 mol% or less of a vinyl monomer unit which is copolymerizable with acrylonitrile is preferably used. Examples of the vinyl monomer which is copolymerizable with acrylonitrile may include acrylic acid, methacrylic acid, itaconic acid, and alkali metal salts, ammonium salts and lower alkyl esters thereof; acrylamide and a derivative thereof; and allylsulfonic acid, methallyl sulfonic acid and salts or alkyl esters thereof. When the copolymerization component in the acrylic copolymer is 10 mol% or less, occurrence of adhesion between single fibers in the stabilization process can be suppressed, which is preferable.

The method of polymerizing the acrylic copolymer is not particularly limited, but a solution polymerization method, a suspension polymerization method, an emulsion polymerization method, or the like can be applied.

A solvent used at the time of spinning the acrylic copolymer is not particularly limited, but examples thereof include organic or inorganic solvents such as dimethyl sulfoxide, dimethylacetamide, dimethylformamide, an aqueous solution of zinc chloride, and nitric acid.

The method of spinning using a solution of acrylic copolymer is not particularly limited, but a wet spinning method, a dry-wet spinning method, a dry spinning method, or the like can be applied.

A coagulated fiber obtained by a wet spinning method, a dry-wet spinning method, or a dry spinning method is subjected to posttreatment of the related art (for example, water washing, bath drawing, oil agent applying, dry densification, and steam drawing) so that a precursor fiber bundle having a predetermined fineness can be obtained.

As the oil agent, a silicone oil agent of the related art or an oil agent composed of an organic compound not containing silicon can be used. An oil agent which can prevent adhesion between single fibers in the stabilization process or the pre-carbonization step is preferably used. As the silicone oil agent, a silicone oil agent containing amino modified silicone having high heat resistance is preferably used.

It is preferable that the fiber bundle applied with an oil agent be dried by heating. It is effective to perform drying treatment in such a manner that the fiber bundle is brought into contact with a roll which has been heated at a temperature of 50 to 200°C. It is preferable that the fiber bundle be dried until the moisture content thereof becomes 1% by mass or less, and the fiber structure be densified.

The dried fiber bundle can be drawn continuously. The drawing method is not particularly limited, but a dry-heating drawing method, a heat plate drawing method, a steam drawing method, or the like can be applied.

The number of filaments of the precursor fiber bundle used in the invention is not particularly limited, but is preferably 1,000 to 300,000, more preferably 3,000 to 200,000, and still more preferably 12,000 to 100,000.

The fineness of the single fibers configuring the precursor fiber bundle is not particularly limited, but is preferably 0.8 to 5.0 dTex, more preferably 0.8 to 3.0 dTex still more preferably 0.9 to 2.5 dTex, and particularly preferably 1.0 to 2.0 dTex.

The total fineness of the precursor fiber bundle is not particularly limited, but is preferably 3,000 to 100,000 dTex.

As the single-fiber fineness of the precursor fiber bundle increases, the fiber diameter of the carbon fiber to be obtained increases. When the carbon fiber is used as a reinforcement fiber of a composite material, it is possible to suppress the buckling deformation of the composite material under a compressive stress. Therefore, from the viewpoint of improving the compressive strength of the composite material, it is preferable that the single-fiber fineness of the precursor fiber bundle be large. On the other hand, as the single-fiber fineness increases, burning unevenness is generated in the flame-resistant fiber bundle in the stabilization process. Accordingly, it is preferable that the single-fiber fineness be small.

From the viewpoint of preventing the unevenness of the stabilization from being generated in the flame-resistant fiber bundle, the cross-sectional shape of the single fiber of the precursor fiber bundle is preferably a flat cross-sectional shape, and particularly preferably a kidney-type cross-sectional shape. In the case of the precursor fiber bundle configured by a group of single fibers each having such a cross-sectional shape, even when the stabilization time is shortened, the unevenness of the stabilization generated in the flame-resistant fiber bundle becomes small and it is possible to obtain a flame-resistant fiber bundle with excellent quality and grade. It is possible to obtain a carbon fiber bundle having a high carbonization yield from the flame-resistant fiber bundle thus obtained.

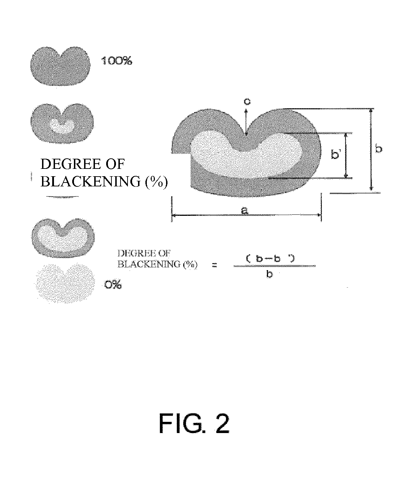

It is preferable that a precursor fiber bundle be configured by a group of single fibers each having the kidney-type cross-sectional shape illustrated in Fig. 2 in which a length of major axis a is 10 to 32 $\mu$m, a length of minor axis b is 6 to 20 $\mu$m, a groove depth c is 0.1 to 3.0 $\mu$m, and an aspect ratio a/b is 1.3 to 1.8. In order to suppress the unevenness of the stabilization in the flame-resistant fiber bundle to be small, the stabilization time needs to be sufficiently long. However, if the aspect ratio of the single fiber cross-section of the precursor fiber bundle is within the above range, the flame-resistant fiber bundle having small unevenness of the stabilization can be produced even when the stabilization treatment time is short.

< Stabilization Process >

In the process for producing a flame-resistant fiber bundle according to the invention, a stabilization process by a heater contacting method is included. Further, in the process for producing a flame-resistant fiber bundle according to the invention, a stabilization process by an atmosphere heating method and a stabilization process by a heater contacting method are included. In the stabilization process, the precursor fiber bundle is subjected to the heat treatment under an oxidizing atmosphere. However, at this time, the precursor fiber bundle generates heat due to the oxidation reaction. It is necessary to perform the stabilization treatment while the reaction heat is controlled so as not to be accumulated in the inside of the fiber bundle and ignite.

As one of indexes representing the progress of stabilization reaction, the density of the flame-resistant fiber is exemplified. As the density of the flame-resistant fiber increases, the above-described exothermic reaction decreases, and the heat resistance of the flame-resistant fiber bundle is also improved. Further, when the single-fiber density of the flame-resistant fiber bundle is in a range of 1.39 to 1.41 $g/cm^3$, the carbonization yield increases as the density increases. When the density exceeds 1.41 $g/cm^3$, the carbonization yield does not increase even when the density of the flame-resistant fiber increases.

As the method of the stabilization treatment, an atmosphere heating method and a heater contacting method are exemplified. In the atmosphere heating method, since the heat-transfer efficiency is low and the reaction heat is likely to be accumulated in the inside of the fiber bundle to ignite, it is necessary to perform the oxidation treatment at a relatively low temperature in a long time. However, since the oxidation treatment is performed over a long time period, there is an advantage in that the fiber bundle can be uniformly subjected to the oxidation treatment. On the other hand, in the heater contacting method, since the heat-transfer efficiency is high and the reaction heat is less likely to be accumulated in the inside of the fiber bundle to ignite, the oxidation treatment can be performed at a relatively high temperature in a short time. However, since the oxidation treatment is performed in a short time, there is a disadvantage in that the unevenness of the stabilization becomes large.

In order to reduce the production cost of the carbon fiber, it is important to consider the effect of improving the carbonization yield in a case where the density of the flame-resistant fiber increases, and the combination of the stabilization treatment methods which is capable of utilizing advantage of each stabilization treatment method to a maximum extent.

Since the precursor fiber bundle and the low-density flame-resistant fiber bundle do not have sufficient heat resistance, the stabilization treatment is difficult to be performed in the heater contacting method in a short time. Therefore, for example, it is preferable that the precursor fiber bundle be first subjected to the stabilization treatment of the atmosphere heating method and then subjected to the stabilization treatment of the heater contacting method. That is, it is preferable that the precursor fiber bundle be first subjected to the stabilization treatment in a relatively long time by the atmosphere heating method by which the stabilization treatment can be performed uniformly so as to be changed to high-density fibers capable of enduring a high temperature in the heater contacting method. Subsequently, it is preferable that the obtained fibers be further subjected to the stabilization treatment by the heater contacting method by which the treatment can be performed in a short time so as to be changed to high-density fibers in which the effect of improving the carbonization yield can be expected. The time for stabilization treatment is shortened as much as possible by using such a combination of the stabilization treatments. This is effective to reduce the production cost of the carbon fiber.

From the viewpoint of the productivity, it is preferable that the fiber-bundle density (dTex/mm) of the precursor fiber bundle in the stabilization process be high as much as possible. However, when the fiber-bundle density is excessively high, the temperature of the fiber bundle is increased by the reaction heat generated at the time of the stabilization reaction. As a result, the decomposition reaction of the polymer drastically occurs in the fiber bundle and thus the fiber bundle is cut. Therefore, from this viewpoint, the fiber-bundle density is preferably 1,500 to 5,000 dTex/mm, and more preferably 2,000 to 4,000 dTex/mm.

[First Stabilization process]

The "first stabilization process" is a stabilization process by an atmosphere heating method. This step [1] is a step in which the precursor fiber bundle is heated in an oxidizing atmosphere having a temperature of 200°C to 300°C for 25 minutes or longer to obtain a flame-resistant fiber bundle (1) having a single-fiber density $\rho_{F1}$ of 1.26 $g/cm^3$ to 1.36 $g/cm^3$.

In this step, a hot air circulating oven which circulates heated oxidation gas can be preferably employed as the oxidation oven. Generally, in the hot air circulating oven, the fiber bundle introduced into the oven is discharged once to the outside of the oven, and then is introduced again in the oven by a turn-over roll installed at the outside of the oven. The fiber bundle is heat-treated while this operation is repeated. In this step, generally, a plurality of hot air circulating ovens are disposed in series, and the temperature of each of the hot air circulating ovens is set such that the temperature thereof becomes higher from the front oven toward the rear oven.

If the facility is increased in size in the atmosphere heating method to improve productivity, the facility investment and the utility cost are increased in proportion thereto. As an atmosphere in the atmosphere heating method, a well-known oxidizing atmosphere such as air, oxygen, or nitrogen dioxide can be employed, but air is preferable in terms of the economic efficiency.

The single-fiber density $\rho_{F1}$ of the flame-resistant fiber bundle (1) obtained by this step [1] is 1.26 to 1.36 $g/cm^3$,

and preferably 1.28 to 1.34 $g/cm^3$. When the density is 1.26 $g/cm^3$ or more, the fiber bundle can endure a high temperature of the heater in the step [2] performed subsequent to the step [1], and thus the fiber bundle can be easily prevented from being wound on the heater such as a heating roll. Further, in the pre-carbonization step and the carbonization step which are performed thereafter, fluff is not generated and a high-quality carbon fiber bundle can be produced. When the density of the flame-resistant fiber bundle (1) is 1.36 $g/cm^3$ or less, the time for the stabilization treatment in the step [2] is not prolonged, and thus the flame-resistant fiber bundle (2) can be effectively produced.

The time for performing the atmosphere heating is preferably 25 minutes or longer, and more preferably 30 minutes or longer, from the viewpoint of allowing the stabilization to proceed to a sufficient extent, that is, up to about a half of the single fiber in the radial direction. The upper limit is not limited, but is preferably 90 minutes or shorter, and more preferably 60 minutes or shorter, in terms of the productivity.

In the process for producing a flame-resistant fiber bundle of the invention, the flame-resistant fiber bundle obtained by the first stabilization process can be used as the flame-resistant fiber bundle (1). As another process for producing the flame-resistant fiber bundle (1), a method of spinning a flame-resistant polymer solution to obtain a flame-resistant fiber bundle, a method of performing oxidation treatment on an acrylic fiber bundle in a liquid phase to obtain a flame-resistant fiber bundle, or the like is exemplified.

[Second Stabilization process]

The "second stabilization process" is a stabilization process by a heater contacting method. This step [2] is a step in which the flame-resistant fiber bundle (1) is brought into contact sequentially with a heater group having a surface temperature $T_H$ of 240°C to 400°C under the following conditions (A), (B), and (C) to obtain a flame-resistant fiber bundle (2) having a single-fiber density $\rho_{F2}$ of 1.33 $g/cm^3$ to 1.43 $g/cm^3$.

(A) When the surface temperature of the heater $H_n$ with which the fiber bundle is brought into contact "n"-thly is designated as $T_{Hn}$ (°C), and the surface temperature of the heater $H_{n+1}$ with which the fiber bundle is brought into contact "n+1"-thly is designated as $T_{Hn+1}$ (°C), the expression "$T_{Hn} < T_{Hn+1}$" is established, with the proviso that n is an integer of 1 or more.
(B) The total contact time between the fiber bundle and the heater group is 10 seconds to 360 seconds.
(C) The contact time between the fiber bundle and each heater is 2 seconds to 20 seconds.

A heater to be installed in the oxidation oven is not particularly limited as long as it is a heater in which consecutive treatment can be performed and the temperature can be easily adjusted. For example, a heat plate, a heating roll, or a large number of flowable fine particles are exemplified. Considering the damage of the fiber bundle due to friction between the heater and the fiber bundle, a heating roll is preferably used.

The diameter of the heating roll is preferably 0.2 to 2.0 m, and more preferably 0.6 to 1.6 m. When the diameter is small, the number of the heating rolls is increased, and thus the number of repetitions of heating and cooling is increased, which is not preferable in terms of the utility cost. When the diameter is large, a surface area effective to a case where the heating roll is used as the heater is decreased, and thus the facility is increased in size, which is not preferable in terms of the economic efficiency.

As the surface temperature $T_H$ of the heater increases, the stabilization reaction speed increases. Accordingly, the stabilization treatment can be performed in a short time. However, when the surface temperature $T_H$ is too high, the decomposition reaction of the polymers configuring the fiber occurs severely and thus breakage of threads easily occurs. Therefore, the surface temperature $T_H$ of the heater is preferably 240 to 400°C.

A plurality of heaters are used to effectively perform the stabilization treatment by the heater contacting method. Since the heat resistance of the fiber bundle is improved as the stabilization reaction proceeds, the surface temperature of each of the heaters configuring the heater group is set such that the temperature thereof becomes higher sequentially, from the viewpoint of effectively treating by the heater contacting method. That is, when the surface temperature of the heater $H_n$ with which the fiber bundle is brought into contact "n"-thly is designated as $T_{Hn}$ (°C), and the surface temperature of the heater $H_{n+1}$ with which the fiber bundle is brought into contact "n+1"-thly is designated as $T_{Hn+1}$ (°C), the expression "$T_{Hn} < T_{Hn+1}$" is established, with the proviso that n is an integer of 1 or more. Incidentally, when the number of the heaters is 3 or more, the relation "$T_{Hn} < T_{Hn+1}$" may be satisfied between at least two heaters. The heaters satisfying the relation "$T_{Hn} = T_{Hn+1}$" are allowed to be included, in so far as the above relation is satisfied.

It is preferable that the total contact time between the fiber bundle and the heaters be as short as possible, from the viewpoint of the productivity. However, when this time is shortened, the surface temperature of the heater needs to be increased. However, when the surface temperature of the heater is too high, the decomposition reaction of the polymer occurs severely and thus the breakage of threads easily occurs, which is not preferable. The total contact time between the fiber bundle and the heaters is 10 seconds to 360 seconds. The total contact time is preferably 12 seconds to 100 seconds, and more preferably 15 seconds to 90 seconds. When the contact time is 10 seconds or longer, the stabilization reaction can easily proceed even when the surface temperature of the heater is not set to be high. When the contact time is 360 seconds or shorter, the increase in the number or size of the heaters is easily suppressed, and thus the facility investment cost is reduced as small as possible, which is preferable.

The contact time between the fiber bundle and each heater is 2 seconds to 20 seconds. The contact time is preferably 2 seconds or longer from the viewpoint of the progress of the stabilization reaction. The contact time is preferably 20 seconds or shorter from the viewpoint of the facility investment cost, the installation space, the heat amount discharged from the heater, and the uniformity of the surface temperature. Further, from these viewpoints, the contact time is preferably 3 seconds to 18 seconds, and more preferably 5 seconds to 15 seconds.

The single-fiber density $\rho_{F2}$ of the flame-resistant fiber bundle (2) obtained by the stabilization treatment of the step [2] is 1.33 g/cm$^3$ to 1.43 g/cm$^3$. When the single-fiber density is 1.36 g/cm$^3$ to 1.43 g/cm$^3$, the carbonization yield increases, which is preferable in terms of the economic efficiency. This single-fiber density is more preferably 1.38 g/cm$^3$ to 1.42 g/cm$^3$.

It is preferable that a value of the surface temperature $T_{H1}$ (°C) of the heater with which the fiber bundle is brought into contact firstly and a value of the contact time $t_1$ (sec) between the fiber bundle and the heater be set to satisfy the following expression (1). When the expression (1) is satisfied, the fiber bundle can be prevented from being rapidly heated, and the occurrence frequency of a case where the fiber bundle is wound on the heater can be reduced.

$$T_{H1} \leq 420 - 7 \times t_1 \cdots (1)$$

In a case where the heater group is a heating roll, a ratio "$V_L/V_1$" (that is, drawing ratio) of the rotation speed $V_1$ of the first heating roll and the rotation speed $V_L$ of the last heating roll is preferably 1.01 times to 1.20 times. The drawing ratio is preferably 1.01 times to 1.18 times, and more preferably 1.01 times to 1.15 times. Since a crystal portion in the fiber or the orientation of the polymer chain is maintained by drawing the fiber at the time of contacting with the heater, the deterioration of the mechanical characteristics of the carbon fiber is suppressed. Further, the movement of each of the polymers configuring the fiber is decreased by extending the fiber, and thus the cyclization reaction can be allowed to proceed slowly, whereby the balance between the cyclization reaction and the oxidation reaction of the polymer can be optimized. As a result, the generation of fluff in the carbonization treatment step or the deterioration of the mechanical characteristics of the carbon fiber is suppressed so that the process stability is improved and a carbon fiber excellent in quality and grade can be provided. Incidentally, a drawing ratio of 1.01 times to 1.20 times means an extending rate of 1% to 20%.

The tension of the fiber bundle between the "n"-th heating roll and the "n+1"-th heating roll is preferably 0.05 cN/dTex. When the tension is 0.05 cN/dTex or more, the deterioration of the process stability or the mechanical characteristics of the carbon fiber in the carbonization treatment step resulting from orientation relaxation of fibers as described above is easily prevented. At the time of contacting the fiber bundle and the heating roll, when the tension of the fiber bundle before the fiber bundle is brought into contact with the heating roll is designated as Tin and the tension of the fiber bundle after the fiber bundle is brought into contact with the heating roll is designated as Tout, it is preferable that the balance between the tensions of the fiber bundle satisfy the following expression (2).

$$Tin \leq Tout \cdots (2)$$

When the above condition is satisfied, the tension of the fiber bundle is maintained at the time of contacting the fiber bundle and the heating roll. Thus, the balance between cyclization reaction and oxidation reaction of the polymer can be maintained and the oxidation reaction becomes sufficient with respect to the cyclization reaction of the polymer. Accordingly, it is easy to prevent the generation of fluff in the carbonization step or the deterioration of the mechanical characteristics of the carbon fiber.

Generally, in the stabilization process of using a heating roll, a "heat-treating + cooling" operation is repeated, that is, the following operation is repeated; first, the fiber bundle is heat-treated by the heating roll, and then this fiber bundle is brought into contact with gas having a temperature lower than a surface temperature of the heating roll to be cooled. As the gas for cooling, a well-known oxidizing atmosphere such as air, oxygen, or nitrogen dioxide can be employed, but air is preferable from the viewpoint of the economic efficiency. Further, since the fiber bundle that has been heated by the surface of the heater is then cooled by oxidized gas having a temperature lower than a surface temperature of the heater, the surface temperature of the heater can be set to be a temperature higher than an atmosphere temperature in the case of the atmosphere heating method.

The relation between the surface temperature of the heating roll and the temperature of the cooling gas is not particularly limited, but it is preferable that, in the step [2], the fiber bundle which has passed through the heater $H_n$

having a surface temperature of $T_{Hn}$ (°C) be brought into contact with gas having a temperature $T_G$ (°C) satisfying the condition of the following expression (3).

$$100 \leq T_{Hn} - T_G \cdots (3)$$

In this way, the stabilization of the fiber bundle proceeds while the fiber bundle is brought into contact alternately and repeatedly with the heating roll and the cooling gas in the oxidation oven. The time for which the fiber bundle stays in the oxidation oven varies depending on the temperature of the heater, the total contact time, the traveling speed of the fiber bundle, or the like, but is about 10 to 1000 seconds.

The heater group is disposed in the oxidation oven. However, it is preferable that air be introduced into the oxidation oven from the lower position in relation to the installation position of each heater. The stabilization treatment of the invention is performed under an oxidizing atmosphere, but it is preferable that fresh air be forcibly introduced from the outside into the oven in order to remove heat generated by the stabilization reaction and to adjust the concentration of flammable gas in the atmosphere to be a concentration equal to or lower than an explosion limit. Further, since the temperature of the upper portion of the oxidation oven is high due to the chimney effect, it is preferable that air be introduced from the lower side of the oven from the viewpoint of the cooling efficiency.

When the density of the flame-resistant fiber bundle (1) obtained in the step [1] is small, since the surface temperature of the heater can be less increased, it is necessary to perform the stabilization treatment in a relatively long time. On the other hand, when the density of the flame-resistant fiber bundle (1) is large, since the surface temperature of the heater can be increased, it is possible to perform the stabilization treatment in a relatively short time. From that reasons, in order to effectively perform the stabilization treatment by the heater contacting method, it is preferable that a value of the single-fiber density $\rho_{F1}$ (g/cm$^3$) of the flame-resistant fiber bundle (1) and a value of the contact time $t_1$ (sec) between the fiber bundle and the first heater satisfy the following expression (4).

$$1.8 \leq (\rho_{F1} - 1.21) \times t_1 \leq 7.2 \cdots (4)$$

When the expression (4) is satisfied, the occurrence of breakage of threads due to the severe decomposition reaction of the polymer is suppressed, and the facility investment cost to the heater can be suppressed.

The surface temperature $T_{H1}$ of the heater with which the flame-resistant fiber bundle (1) obtained in the step [1] is brought into contact firstly is preferably 240 to 320°C. When the surface temperature $T_{H1}$ is 240°C or higher, the stabilization of the fiber bundle easily proceeds, and thus the time for the stabilization treatment can be shortened. Further, when the surface temperature $T_{H1}$ of the heater with which the flame-resistant fiber bundle (1) is brought into contact firstly is 320°C or lower, the fusion between the single fibers of the flame-resistant fiber bundle (1) does not occur. The fusion between the single fibers of the flame-resistant fiber bundle acts as a starting point of cutting the single fibers, and this causes a fluff generation in the fiber bundle, which is not preferable.

The surface temperature $T_{HL}$ of the heater with which the flame-resistant fiber bundle (1) is brought into contact lastly is preferably 330 to 400°C. When the surface temperature $T_{HL}$ is 330°C or higher, a stabilization reaction speed is sufficiently fast, and thus the stabilization treatment can be performed in a short time. Accordingly, the facility investment cost can be reduced. When the surface temperature $T_{HL}$ is 400°C or lower, the decomposition reaction of the polymer is less. Accordingly, it is possible to reduce a risk of breakage of threads of the single fibers configuring the bundle fiber or winding of the fiber bundle on a roll.

It is preferable that the step [2] include steps (1) to (3) using the following three heater groups:

(1) a step in which the single-fiber density of the flame-resistant fiber bundle is adjusted to 1.30 to 1.38 g/cm$^3$ by oxidation treatment using a heater group 1 having a surface temperature of 240°C to 290°C;
(2) a step performed subsequent to the step (1) in which the single-fiber density of the flame-resistant fiber bundle is adjusted to 1.32 g/cm$^3$ to 1.40 g/cm$^3$ by oxidation treatment using a heater group 2 having a surface temperature of 260°C to 330°C; and
(3) a step performed subsequent to the step (2) in which the single-fiber density of the flame-resistant fiber bundle is adjusted to 1.34 g/cm$^3$ to 1.42 g/cm$^3$ by oxidation treatment using a heater group 3 having a surface temperature of 280°C to 400°C.

When these steps are employed, the stabilization reaction is easy to proceed up to the center portion of the single fiber, and thus the mechanical characteristics of the carbon fiber bundle to be obtained can be enhanced.

[Third Stabilization process]

After the second stabilization process, as necessary, it is possible to perform a third stabilization process that is a stabilization process by the atmosphere heating method. This step [3] is a step in which the surface temperature $T_{HL}$ of the heater with which the fiber bundle is brought into contact lastly is adjusted to 280°C to 330°C in the step [2], and after the step [2], the flame-resistant fiber bundle (2) is heated in an oxidizing atmosphere having 250°C to 300°C, thereby obtaining a flame-resistant fiber bundle (3) having a single-fiber density $\rho_{F3}$ of 1.35 g/cm$^3$ to 1.43 g/cm$^3$.

In this step [3], the same oxidation oven, such as a hot air circulating oven, as in the case of the step [1] can be used. Regarding the oxidizing atmosphere, in a similar way to the case of the step [1], a well-known oxidizing atmosphere such as air, oxygen, or nitrogen dioxide can also be employed, but air is preferable in terms of the economic efficiency.

The heating temperature in this step [3] is preferably 260°C to 270°C. When the heating temperature is 260°C or lower, the time required for this step can be shortened, which is preferable in terms of the economical aspect. Further, when the heating temperature is 270°C or lower, occurrence of the runaway reaction in the fiber bundle can be suppressed. As a result, the breakage of threads is suppressed.

The single-fiber density $\rho_{F3}$ of the flame-resistant fiber bundle (3) obtained after this step [3] is 1.35 g/cm$^3$ to 1.43 g/cm$^3$, and preferably 1.35 g/cm$^3$ to 1.40 g/cm$^3$. Incidentally, when the density of the flame-resistant fiber bundle becomes higher, the burning unevenness of the carbon fiber bundle is suppressed, which is preferable. However, when the density of the flame-resistant fiber bundle is set to be high, since the time for the stabilization treatment is prolonged. This is not preferable from the viewpoint of the productivity of the carbon fiber bundle. That is, when the single-fiber density $\rho_{F3}$ is 1.35 g/cm$^3$ or more, the fiber bundle has good processability in the carbonization step, and when the single-fiber density $\rho_{F3}$ is 1.43 g/cm$^3$ or less, the productivity of the carbon fiber bundle is favorable.

As described above, it is preferable that, in the step [3], a flame-resistant fiber bundle having a single-fiber density of 1.36 to 1.43 g/cm$^3$ be obtained by heat-treating the fiber bundle obtained after the step [2] in an oxidizing atmosphere having 260 to 270°C. According to this, generation of fluff due to the burning unevenness in the pre-carbonization step or the carbonization step can be easily prevented, and thus a high-quality carbon fiber bundle can be effectively produced.

<Flame-resistant Fiber Bundle>

A flame-resistant fiber bundle having less density unevenness is produced by using the process for producing a flame-resistant fiber bundle of the invention, the fiber bundle being configured by a single fiber group, which has a single-fiber fineness of 0.8 to 5.0 dTex, and having an average density of the single fibers of 1.33 to 1.43 g/cm$^3$ and a variation coefficient CV of the density in the fiber bundle of 0.2% or less.

[Density]

That is, in the invention, it is possible to obtain a flame-resistant fiber bundle having a high homogeneity of stabilization degree regardless of short stabilization treatment time. In the cross-section of each of the single fibers constituting the precursor fiber bundle, the stabilization reaction proceeds up to the inside of the single fiber by the stabilization treatment in such a manner that the stabilization treatment is started from the surface layer of the single fiber. The progress status of the stabilization is reflected to the cross-sectional structure of the single fiber, and when the cross-section of the single fiber is observed with an optical microscope, it is observed that the blackening is started from the surface layer. The double cross-section (skin-core) structure where a blackened portion and a non-blackened portion of the fiber cross-section are present is observed in the course of the stabilization reaction. In the single fibers constituting the flame-resistant fiber bundle, when the flame-resistant fiber bundle having an unevenness in the cross-section double structure of the single fiber is supplied to the pre-carbonization step or the carbonization step, the single fiber having a large proportion of non-blackened portions where the stabilization reaction does not proceed is cut to become fluff, and thus the quality of the carbon fiber bundle tends to be deteriorated. When the variation coefficient CV of the density of the flame-resistant fiber bundle which has undergone the second stabilization process of the invention is 0.2% or less, processability in the pre-carbonization step or the carbonization step which is a subsequent step is improved and thus the development of fluff is suppressed.

[Blackening Degree]

The blackening degree of each of the single fibers constituting the flame-resistant fiber bundle of the invention is a value defined by Fig. 2. The blackening degree is preferably 70 to 100% and the variation coefficient CV of the blackening degree is preferably 15% or less. When the cross-section of the flame-resistant fiber is observed using a fluorescence microscope, a portion in which the stabilization reaction has proceeded is observed to be black, and a portion in which the stabilization reaction has not proceeded is observed to be white, that is, a double cross-section (skin-core) structure with black-and-white contrast is observed. When the blackening degree is 70% or more, the abrupt generation of gas caused in accordance with the decomposition reaction of the polymer is suppressed in the pre-carbonization step and/or the carbonization step which are steps subsequent to the stabilization process. As a result, the cutting of the single fiber is less likely to occur in the pre-carbonization step and/or the carbonization step, thereby decreasing the generation of fluff in a carbonized fiber bundle to be obtained.

A case where the variation coefficient CV of the blackening degree is small means that the stabilization reaction uniformly proceeds toward the radius direction of each single fiber configuring the flame-resistant fiber bundle. When a single fiber in which the stabilization reaction insufficiency proceeds is present in the flame-resistant fiber bundle, the relevant single fiber portion is cut in the pre-carbonization step and/or the carbonization step so as to become a fluff that is present in the fiber bundle. When the variation coefficient CV of the blackening degree of the flame-resistant fiber bundle is 15% or less, the fiber bundle has excellent processability in the pre-carbonization step and/or the carbonization step, and thus a carbon fiber bundle to be obtained has less fluff.

[Cross-Sectional Shape]

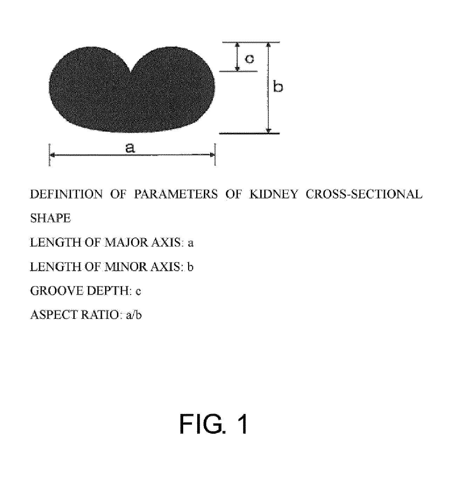

The cross-sectional shape of the single fiber of the flame-resistant fiber bundle of the invention is, as described in Fig. 1, preferably a kidney-type cross-sectional shape having a length of major axis a of 10 to 32 $\mu$m, a length of minor axis b of 6 to 20 $\mu$m, a groove depth c of 0.1 to 3.0 $\mu$m, and an aspect ratio "a/b" of 1.3 to 1.8. The cross-sectional shape of the flame-resistant fiber bundle of the invention is similar to the cross-sectional shape of the precursor fiber to be used. However, parameters of the cross-sectional shape, which is illustrated in Fig. 1, of the flame-resistant fiber bundle vary depending on the stabilization treatment conditions. When the aspect ratios "a/b" of the single fiber of the precursor fiber bundle and the single fiber of the flame-resistant fiber bundle are 1.3 or more, heating is easily performed up to the inside of the fiber in the subsequent carbonization step, and thus a high-quality carbon fiber may be easily obtained. The aspect ratio a/b is more preferably 1.5 or more. Further, when the aspect ratio a/b is 1.8 or less, the mechanical characteristics of the carbon fiber is less deteriorated. The aspect ratio a/b is more preferably 1.7 or less. When the groove depth c is 0.1 $\mu$m or more, heating is easily performed up to the inside of the fiber in the subsequent carbonization step, and thus a high-quality carbon fiber may be easily obtained. The groove depth c is more preferably 0.5 $\mu$m or more, and still more preferably 0.8 $\mu$m or more. Further, when the groove depth c is 3.0 $\mu$m or less, the mechanical characteristics of the carbon fiber is less deteriorated. The groove depth c is more preferably 1.5 $\mu$m or less. In particular, in a case where the single-fiber fineness is large, when the precursor fiber has a cross-sectional shape having a high specific surface area, stabilization reaction easily proceeds and thus the time for the stabilization treatment can be shortened. As a shape of the flame-resistant fiber having a high aspect ratio of the invention, a kidney-type cross-section is preferable.

When the fiber bundle configured by a single fiber group having a kidney-type cross-section is used as a precursor fiber bundle and the stabilization treatment method of the invention is applied, the variation coefficient CV of blackening degree in the flame-resistant fiber bundle can be suppressed to 15% or less.

[Degree of Orientation and Fiber Structure]

The flame-resistant fiber bundle of the invention is preferably configured such that a degree of orientation $\pi$ (20 = 25° peak), which is obtainable by wide-angle X-ray analysis, is 68% to 74%, and a ratio "A/S x 100%" of an area A at the spectrum peak in the vicinity of 135 ppm, which is obtainable by solid state $^{13}$C-NMR, to the whole spectrum area S is 14% to 17%. In order to exhibit a favorable strand tensile elastic modulus of the carbon fiber, it is important that the graphite structure of the carbon fiber is oriented. In this regard, it is important that the degree of orientation of the flame-resistant fiber is high. As an apparatus for measuring a degree of orientation, commercially available wide-angle X-ray apparatuses can be used. The "20 = 25° peak" corresponds to the plane index (002) of the graphite. The degree of orientation $\pi$ is more preferably 70% to 72%.

When acrylonitrile is cyclodehydrogenated, a ring structure in which naphthyridine is continued is formed. The peak in the vicinity of 135 ppm described above is a peak derived from carbon facing nitrogen configuring this ring. As the subsequent pre-carbonization step and carbonization step proceed, it is considered that this ring generates a graphite crystal, and thus acrylonitrile needs to be present at an appropriate amount. When the ratio "A/S x 100%" of the areas is 14% or more, the cyclodehydrogenation of acrylonitrile proceeds and thus decomposed matters generated in the pre-carbonization step is decreased, which is preferable. It is preferable that the ratio "A/S x 100%" be high from the viewpoint in that the cyclodehydrogenation proceeds in the pre-carbonization step. However, in order to set the ratio to 17% or more, it is necessary to prolong the stabilization time. Therefore, the ratio is preferably 17% or less in terms of the economical aspect. The ratio "A/S x 100%" is more preferably 15% to 16%.

<Pre-Carbonization Treatment>

The flame-resistant fiber bundle is changed to a carbon fiber bundle by performing the carbonization treatment, but it is preferable to perform the pre-carbonization treatment before performing the carbonization treatment. When the pre-carbonization treatment is performed, the mechanical characteristics of the carbon fiber are improved, the time for the carbonization treatment can also be shortened, and the carbonization yield is also improved. The pre-carbonization treatment may be omitted.

The pre-carbonization treatment is carried out, for example, in an inert atmosphere, at a highest temperature of 500 to 800°C under strain and at a temperature increase rate of 300°C/min or less, and preferably at a temperature increase rate of 100°C/min or less, in a temperature range of 400 to 500°C. Further, the time for the pre-carbonization treatment is preferably 0.6 to 3.0 minutes from the viewpoint of the productivity of the carbon fiber and the strength development of the carbon fiber. As the atmosphere for the pre-carbonization, a well-known inert atmosphere such as nitrogen, argon, or helium can be employed, but nitrogen is desirable in terms of the economic efficiency.

It is preferable that the traveling speed of the fiber bundle in the pre-carbonization step be fast as much as possible, from the viewpoint of the productivity. However, when the traveling speed is too fast, it is not possible to secure sufficient treatment time for the pre-carbonization step and the carbonization step although depending on the sizes of the pre-carbonization furnace and the carbonization furnace. Thus, the fiber bundle is cut in these steps, the mechanical characteristics of the carbon fiber are deteriorated, or the carbonization yield is lowered. Therefore, the traveling speed of the fiber bundle is preferably 2.0 to 20.0 m/min, and more preferably 3.0 to 15.0 m/min.

<Carbonization Treatment>

The carbonization treatment is carried out, for example, by applying strain to the fiber bundle in an inert atmosphere, at a highest temperature of 1200 to 2000°C and at a temperature increase rate of 500°C/min or less, and preferably at a temperature increase rate of 300°C/min or less, in a temperature range of 1000 to 1200°C. The heating treatment performed in this way is effective to improvement of the mechanical characteristics of the carbon fiber. The time for the carbonization treatment is preferably 0.6 to 3.0 minutes from the viewpoint of the productivity of the carbon fiber and the strength development of the carbon fiber. As the atmosphere for the carbonization, a well-known inert atmosphere such as nitrogen, argon, or helium can be employed, but nitrogen is desirable in terms of the economic efficiency.

<Carbon Fiber Bundle>

The cross-sectional shape of the single fiber of the carbon fiber bundle of the invention is a kidney-type cross-sectional shape having a length of major axis a of 5 to 16 $\mu$m, a length of minor axis b of 3 to 10 $\mu$m, a groove depth c of 0.70 to 3 $\mu$m, and an aspect ratio a/b of 1.3 to 1.8. In the invention, the cross-sectional shape of each of the single fibers configuring the precursor fiber bundle is similar to a cross-sectional shape of each of the single fibers constituting the carbonized fiber bundle. However, the above-described parameters of the precursor fiber (that is, values of a, b, c, and a/b) are changed depending on the treatment allocation of the first stabilization process and the second stabilization process. That is, parameter values of the precursor fiber and parameter values of the carbon fiber are not the same as each other. The cross-sectional shape of the carbon fiber has the parameters having numerical values described above. The cross-sectional shape of the carbon fiber is formed in a shape having a groove deeper than that of the cross-sectional shape of the precursor fiber bundle.

<Graphitization Treatment>

The carbon fiber bundle of the invention can be graphitized by a well-known method as necessary. For example, such a carbonized fiber bundle can be graphitized by heating the carbonized fiber bundle, in an inert atmosphere, at a highest temperature of 2000 to 3000°C and under strain.

<Surface Treatment>

The carbon fiber bundle or graphitic fiber bundle thus obtained can be subjected to electrolytic oxidation treatment for its surface modification. As an electrolyte used in the electrolytic oxidation treatment, an acidic solution of sulfuric acid, nitric acid or hydrochloric acid, or an alkali such as sodium hydroxide, potassium hydroxide, ammonia, and tetraethyl ammonium hydroxide or salts thereof as an aqueous solution can be used. Herein, the quantity of electricity required for the electrolytic oxidation treatment can be appropriately selected according to the carbon fiber bundle or graphitic fiber bundle to be applied. According to this electrolytic oxidation treatment, it is possible to make the adhesion between the carbon fiber and a matrix resin appropriate in a composite material to be obtained, and thus well-balanced strength properties in the composite material to be obtained may be developed. After the electrolytic oxidation treatment, the sizing treatment can also be carried out in order to impart a unity of bundle to the carbon fiber to be obtained. As a sizing agent, it is possible to appropriately select a sizing agent which is compatible with a resin depending on the type of a resin to be used.

The carbon fiber bundle or graphitic fiber bundle thus obtained can be formed into a prepreg and then molded into a composite material. Further, the carbon fiber bundle or graphitic fiber bundle thus obtained can also be formed into a pre-form such as fabric and then molded into a composite material by a hand lay-up method, a pultrusion method, a resin-transfer-molding method, or the like. Furthermore, the carbon fiber bundle or graphitic fiber bundle thus obtained can be molded into a composite material by a filament winding method, or by injection molding after the fiber bundle is formed into chopped fibers or milled fibers.

EXMAPLE

Hereinafter, the invention will be described in more detail by way of Examples. Prior to Examples, various evaluation methods will be described.

[1. Total Fineness of Acrylic Precursor Fiber Bundle and Carbon Fiber Bundle]

The total finenesses of the precursor fiber bundle and the carbon fiber bundle were measured in conformity to JIS R 7605.

[2. Fiber-Bundle Density in Stabilization process]

A fiber-bundle density of the precursor fiber bundle to be introduced into a stabilization treatment device was obtained by the following expression.

$$\text{Fiber-bundle density (dTex/mm)} = \text{Total fineness of precursor}$$

$$\text{fiber bundle/Width of precursor fiber bundle} \cdots (5)$$

[3. Density of Flame-resistant Fiber Bundle and Variation Coefficient of Density]

The density of the flame-resistant fiber bundle was measured in conformity to JIS R 7603. Five flame-resistant fiber bundles were prepared and each of the bundles was divided into 20 parts to obtain 100 samples. The density of each sample was measured 5 times and the variation coefficient CV thereof was obtained by the following expression.

$$\text{Variation coefficient CV (\%)} = \text{Standard deviation/Average value} \times$$

$$100 \cdots (6)$$

[4. Cross-Sectional Shape and Shape Unevenness of Flame-resistant Fiber]

The flame-resistant fiber bundle was cut to a length of 10 cm, immersed with a transparent epoxy resin, molded into a columnar shape having a diameter of about 5 mm, and cured at room temperature. The end face of the cured sample was roughly polished with #200 wet polishing sandpaper, and then finely polished with #400, #600, and #1200 wet sandpaper. Further, the end face of the sample was smoothly finished using a mirror polishing buff and an alumina suspension. The polished sample was set on an epifluorescence microscope and then the cross-sectional shape thereof was observed.

The cross-section of the sample was moved horizontally and vertically at intervals of 1 mm to obtain 16 to 50 images. An enlargement magnification of the epifluorescence microscope was adjusted such that the cross-sections of 50 to 70 single fibers appeared in one image, and then the images thereof were captured using a digital camera. The image analysis was carried out on the obtained images to measure the length of major axis a, the length of minor axis b, and the groove depth c, which are parameters of the kidney-type cross-sectional shape illustrated in Fig. 1.

[5. Cross-Sectional Shape of Carbon Fiber]

The image analysis was carried out on the cross-section of the carbon fiber bundle obtained using an electron microscopic image (SEM image) to measure the length of major axis a, the length of minor axis b, the groove depth c, and the aspect ratio a/b of the kidney-type cross-section. The analysis of the cross-sectional shape was carried out using 20 images, each image in which the cross-sections of 50 to 70 fibers were captured. The cross-sectional shapes of 1000 to 1400 single fibers were measured. Further, a variation coefficient CV of each value was obtained according to the above-described expression (6).

[6. Blackening Degree of Flame-resistant Fiber and Variation Coefficient of Blackening Degree]

A thickness b of the cross-section of each of the single fibers configuring the fiber bundle and a thickness b' of a non-blackened layer were measured using an image obtained by the observation of the cross-sectional shape in the above section [4.] as illustrated in Fig. 2, and then the blackening degree was calculated according to the following expression (7). The analysis of the cross-sectional shape was carried out using 20 images, each image in which the cross-sections of 50 to 70 fibers were captured. The cross-sectional shapes of 1000 to 1400 single fibers were measured. Further, variation coefficients CV of the blackening degrees thereof were obtained according to the above-described expression (6).

$$\text{Blackening degree (\%)} = (b - b')/b \times 100 \cdots (7)$$

b: Thickness of fiber cross-section ($\mu$m)
b': Thickness of non-blackened layer of fiber cross-section ($\mu$m)

[7. Characteristic of Strand Impregnated with Resin]

The strand strength and the strand elastic modulus of the carbon fiber bundle were measured in conformity to the test methods described in JIS-R-7608.

[8. Extending Rate of Carbonization Step from Stabilization process]

The extending rate $E_T$ (%) from the stabilization process to the carbonization step was obtained by the following expression (8).

$$E_T \, (\%) = (V_O - V_I)/V_I \times 100 \cdots (8)$$

$V_O$: Traveling speed of carbon fiber bundle at outgoing side from carbonization step (m/min)
$V_I$: Traveling speed of precursor fiber bundle at ingoing side to stabilization process (m/min)

[9. Carbonization Yield]

The carbonization yield was obtained using a basis weight of the precursor fiber bundle, a basis weight of the carbon fiber bundle, and the extending rate $E_T$ (%) by the following expression (9).

$$\text{Carbonization yield (\%)} = (100 + E_T) \times A/B \cdots (9)$$

A: Basis weight of carbon fiber bundle (g/m)
B: Basis weight of precursor fiber bundle (g/m)

[10. Visual Inspection of Amount of Fluff of Carbon Fiber Bundle]

The fiber bundle, which has been traveling, discharged from a carbonization furnace was visually observed for 10 minutes, and the number of pieces of fluff was counted so as to be ranked based on the following criteria.

Rank A: Case where the number of pieces of fluff is 10 or less
Rank B: Case where the number of pieces of fluff is 11 to 99
Rank C: Case where the number of pieces of fluff is 100 or more

[11. Amount of Fluff of Carbon Fiber Bundle]

The carbon fiber bundle was caused to travel 100 m at a speed of 10 m/min in a state where a tension of 100 g per 1,000 dTex was applied to the carbon fiber bundle, laser beams were allowed to pass through a fixed point separated from the upper surface of the fiber bundle by 5 mm, and then the number of pieces of fluff through which laser beams have passed was determined. An average value of the number of pieces of fluff per a fiber length of 1 m was designated as an amount of fluff (piece/m).

[12. Fusion Amount of Carbon Fiber Bundle]

One carbon fiber bundle was divided into a plurality of bundles each configuring 10,000 short fibers/bundle. The one fiber bundle obtained was cut to a length of 3 mm, the cut fibers were put into a 300 ml beaker, and further added with 200 ml of ion-exchange water. Subsequently, a magnetic stirrer having a length of 15 mm was put into the beaker, followed by being rotated for 10 minutes at a speed of 50 rotations/min. Thereafter, the content was immediately transferred into a petri dish having a diameter of 200 mm. After it was confirmed that all fibers were sunk in the petri dish, the number "n" of portions where the single fibers adhered was counted using a loupe, and a fusion amount was denoted as "n per 10,000 pieces."

[13. Single-Fiber Fineness of Precursor Fiber Bundle]

The single-fiber fineness is mass (g) of one fiber per 10,000 m. Two fiber bundles having a length of 1 m were taken from the precursor fiber bundles and the mass (g) of each fiber bundle was measured. An average value of two values obtained by dividing each mass by a filament number (that is, the number of die holes) and then multiplying the resultant value by 10,000 was designated as the "single-fiber fineness."

[14. Single-Fiber Density of Flame-resistant Fiber Bundle]

The density of the single fiber of the flame-resistant fiber bundle was measured using a density-gradient tube. Measurement was conducted 5 times per one sample, and an average value of the measured densities was designated as the "single-fiber density."

[15. Extending rate in Heater Contacting Step]

The extending rate was calculated by using the following expression (10).

$$\text{Extending rate } E_H\,(\%) = (V_L - V_1)/V_1 \times 100 \cdots (10)$$

$V_1$: Rotation speed of the heating roll with which the fiber bundle is brought into contact firstly (m/min)
$V_L$: Rotation speed of the heating roll with which the fiber bundle is brought into contact lastly (m/min)

[16. Degree of Orientation $\pi$ of Flame-resistant Fiber Bundle]

The fiber bundle to be measured is cut at arbitrary sites to obtain fiber pieces having a length of 5 cm. Among them, 12 mg of fiber pieces are precisely weighed as sample fiber pieces and arranged such that the sample fiber pieces are accurately parallel to the fiber axis. Subsequently, the fiber bundle is prepared such that the width in the direction perpendicular to the longitudinal direction of the fiber is 2 mm, and the thicknesses in the directions perpendicular not only to the width direction but also to the longitudinal direction are uniform. Then, the fibers thus prepared are bonded to each other by impregnating both ends of the prepared fiber bundle with a vinyl acetate/methanol solution so that the shape of the fiber bundle will not be lost. This is used as a sample fiber bundle to be subjected to measurement.
This is fixed on a sample stand for wide-angle X-ray diffraction and then $\beta$ measurement of the X-ray diffraction is carried out. The $\beta$ measurement of the X-ray diffraction is a method in which the diffraction intensity is measured while the sample fiber bundle is rotated 360° on the plane perpendicular to the X-ray. Specifically, a diffraction profile in the vicinity of 20 = 25° is obtained by 20 measurement in a direction perpendicular to the fiber direction. Next, a scintillation counter is fixed at a 20 angular position which shows an intensity peak-top value in the profile, and then a diffraction intensity is measured while a holder to which the sample fiber bundle is fixed is rotated 360° on the plane perpendicular to the incident X-ray. The half bandwidth B of the diffraction intensity peak (unit: °) is obtained and a degree of crystal orientation (unit: %) is obtained using the following expression (11).

$$\text{Degree of orientation } \pi \text{ (unit: \%)} = \{(180 - B)/180\} \times 100 \cdots(11)$$

A degree of crystal orientation is measured by taking three sample fiber bundles in the longitudinal direction of the fiber bundle to be measured, a degree of crystal orientation of each of the three sample fiber bundles is obtained, and then an average value thereof is calculated. This average value is designated as a value of the "degree of orientation $\pi$" in the invention.

CuK$\alpha$ ray (with a Ni filter) X-ray generation apparatus (trade name: TTR-III, rotary counter cathode type X-ray generation apparatus) manufactured by Rigaku Corporation was used as an X-ray source. A diffraction intensity profile was detected by a scintillation counter manufactured by Rigaku Corporation. Incidentally, the output was set to 50 kV-300 mA.

[17. Area Ratio of Spectrum Obtained by Solid State $^{13}$C-NMR]

The flame-resistant fiber bundle is packed without space into a zirconia sample tube having an external diameter of 2.5 mm such that the longitudinal direction corresponds with the fiber axis, and subjected to the measurement. AVANCEII 300 MHz magnet manufactured by Bruker Bio-Spin is used as the apparatus. A 2.5 mm sample tube probe is used as a probe. The measurement was carried out using the CP-MAS method. The measurement conditions are as follows.

MAS rotation: 16 kHz
90° pulse width of H-nucleus: 3.0 $\mu$s
Contact time: 8 ms
Repeat waiting time: 10 s
Cumulated number: 4,096

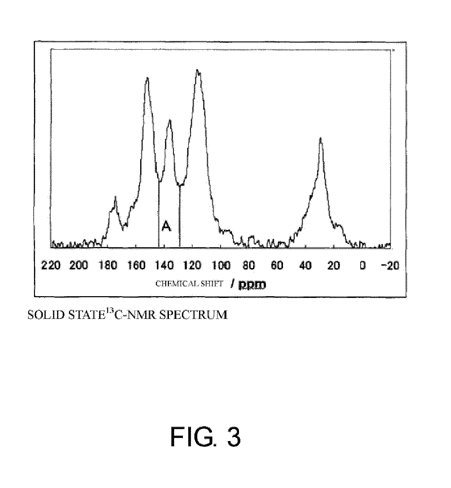

As for the obtained spectrum, an area A between two minimum values in which chemical shifts appear at both ends of the peak at about 135 ppm, as illustrated in Fig. 3, is obtained using the attached software. Further, an area S of the entire spectrum is obtained, and then a ratio "A/S x 100%" of the area A to the area S is obtained. Incidentally, a range of the entire spectrum is set to 0 to 200 ppm.

(Example 1)

A dimethylacetamide (DMAC) solution (spinning dope) having a concentration of 22% by mass was prepared using an acrylic copolymer composed of 96% by mass of an acrylonitrile unit (hereinafter, referred to as the "AN unit"), 3% by mass of an acrylamide unit (hereinafter, referred to as the "AAm unit"), and 1% by mass of a methacrylic acid unit (hereinafter, referred to as the "MAA unit"). This spinning dope was discharged into the aqueous solution of DMAC (temperature of 35°C, solvent concentration of 67% by mass) through a spinneret having a pore size of 60 $\mu$m and a hole number of 12,000 and then was allowed to be coagulated. The coagulated fiber bundle thus obtained was washed with water and then drawn in warm water having a temperature of 95°C, and was immersed in an oil agent treatment bath filled with an oil treatment solution to be applied with an oil agent. Thereafter, this fiber bundle was further drawn to 3 times in the pressurized steam to obtain an acrylic precursor fiber bundle having a single-fiber fineness of 1.2 dTex and a total fineness of 14,400 dTex.

Incidentally, the oil treatment solution was prepared as follows. First, amino-modified silicone (manufactured by Shin-Etsu Chemical Co., Ltd., trade name: KF-865) and a surfactant (manufactured by Nikko Chemicals Co., Ltd., trade name: NIKKOL BL-9EX) were mixed at a ratio of 9 : 1 (part by mass), and deionized water was added to the resultant mixture to prepare a solution mixture having a concentration of 35% by mass. Subsequently, after this solution mixture was stirred using a homogenizing mixer, an average particle size of oil drops in the solution was adjusted to 0.3 $\mu$m or less by using a high-pressure homogenizer. Further, this solution was diluted to have a component concentration of 1% by mass by adding deionized water thereto to obtain an oil treatment solution.

The following step was carried out as the first stabilization process. This precursor fiber bundle was introduced into a hot air circulating oven at a traveling speed of 5.7 m/min and a fiber-bundle density of 2,400 dTex/mm, and then heated for 40 minutes in an air atmosphere having a temperature of 230 to 250°C and under strain with a tension of 1.0 cN/dTex, thereby obtaining a flame-resistant fiber bundle having a single-fiber density of 1.30 g/cm$^3$. Subsequently, the following step was carried out as the second stabilization process. This fiber bundle was brought into contact sequentially with a heating roll group consisting of six heating rolls having a diameter of 60 cm, thereby obtaining a flame-resistant fiber bundle having a single-fiber density of 1.41 g/cm$^3$. The surface temperatures of the respective heating rolls were 300°C, 309°C, 321°C, 337°C, 358°C, and 379°C, respectively, in order in which the fiber bundle was brought into contact with the heating rolls. The contact time with each heating roll was 10 seconds, and the total contact time was 60 seconds. Further, the ambient temperature around the heating rolls was 120°C.

The flame-resistant fiber bundle obtained was introduced into a pre-carbonization furnace, and then heated for 1 minute, in a nitrogen atmosphere, at a highest temperature of 600°C and under strain with a tension of 0.1 cN/dTex, thereby obtaining a carbonized fiber bundle. Incidentally, the temperature increase rate between temperatures of 400 to 500°C was 200°C/min.

The pre-carbonized fiber bundle obtained was introduced into a carbonization furnace, and then heated for 1 minute, in a nitrogen atmosphere, at a highest temperature of 1350°C and under strain with a tension of 0.1 cN/dTex, thereby obtaining a carbonized fiber bundle. Incidentally, the temperature increase rate between temperatures of 1000 to 1200°C was 400°C/min.

The carbonized fiber bundle obtained was subjected to the surface treatment and then applied with a sizing agent, thereby obtaining a carbon fiber bundle having a total fineness of 8,350 dTex. The extending rate of the carbonization step from the stabilization process was -5.0%.

The characteristics of the resin-impregnated strand of this carbon fiber bundle were measured to be an elastic modulus of 235 GPa and a strength of 4.8 GPa. Further, the carbonization yield was 55.1%. The amount of fluff was 5 pieces/m and the evaluation of fluff was "Rank A."

(Examples 2 to 12 and Comparative Examples 1 to 3)

As for Examples 2 to 12 and Comparative Examples 1 to 3, the treatment was performed using a precursor fiber bundle obtained in the same manner as in Example 1 under the stabilization treatment conditions presented in Table 1. The flame-resistant fiber bundle obtained was subjected to the pre-carbonization treatment, the carbonization treatment, the surface treatment, and the sizing treatment under the same conditions as in Example 1, thereby obtaining a carbon fiber bundle. The extending rate of the carbonization step from the stabilization process was -5.0%. The results are presented in Table 2.

In Comparative Example 1, the fiber bundle did not undergo a cutting step in the pre-carbonization step. In Comparative Example 3, the fiber bundle did not undergo a cutting step on the heating roll.

When Examples 1 to 3 are compared with Comparative Example 2, it is possible to confirm the influence of the single-fiber density of the flame-resistant fiber in the atmosphere heating method on fluff generated by breakage of the single fiber in the pre-carbonization step and the carbonization step. That is, when the single-fiber density is lower than 1.27 g/cm$^3$, a large number of pieces of fluff were generated in the carbon fiber bundle and thus a problem arose in terms of the quality. Further, as seen in Comparative Example 1, in the stabilization treatment performed by the atmosphere heating method, when the single-fiber density was low, the fiber bundle did not undergo the pre-carbonization step.

When Examples 1 and 5 are compared with Comparative Example 3, it is possible to confirm the influence of the stabilization time on fluff generated by breakage of the single fiber in the pre-carbonization step and the carbonization step. That is, when the stabilization time was short, a large number of pieces of fluff were generated in the carbon fiber bundle and thus a problem arose in terms of the quality.

When Examples 1, 3, 6, 7, 8, and 9 are compared with Comparative Example 3, it is possible to confirm the influence of the treatment time in the heater contacting method on fluffs generated by breakage of the single fiber in the pre-carbonization step and the carbonization step. That is, when the treatment time in the heater contacting method was short, a problem arose.

(Example 13)

A DMAC solution (spinning dope) having 20% by mass of an acrylic copolymer composed of 96 mol% of the AN unit, 3 mol% of the AAm unit, and 1 mol% of MAA unit was prepared. This spinning dope was discharged into the aqueous solution of DMAC (temperature of 35°C, solvent concentration of 67% by mass) through a spinneret having a pore size of 60 μm and a hole number of 60,000 and then was allowed to be coagulated, thereby obtaining a coagulated fiber bundle. The coagulated fiber bundle thus obtained was washed with water and then drawn to 3 times in warm water having a temperature of 95°C, and was immersed in an oil agent treatment bath filled with an oil treatment solution to be applied with an oil agent. Thereafter, this fiber bundle was dried at a temperature of 135°C for 3 minutes. This fiber bundle was further drawn to 3 times in the pressurized steam to obtain an acrylic precursor fiber bundle having a single-fiber fineness of 1.0 dTex and a total fineness of 60,000 dTex. Incidentally, the same oil treatment solution as in Example 1 was used as the oil treatment solution.

The following step was carried out as the first stabilization process. This acrylic precursor fiber bundle was introduced into a hot air circulating oven at a traveling speed of 0.9 m/min and a fiber-bundle density of 3,429 dTex/mm, and then heated in an air atmosphere having a temperature of 220 to 250°C and under strain with a tension of 2 mN/dTex, thereby obtaining a flame-resistant fiber bundle having a single-fiber density of 1.30 g/cm$^3$.

Subsequently, the following step was carried out as the second stabilization process. This fiber bundle was brought into contact with a heating roll group 1 consisting of four heating rolls having a diameter of 20 cm, then brought into contact with a heating roll group 2 consisting of four heating rolls having a diameter of 20 cm, and further brought into contact sequentially with a heating roll group 3 consisting of eight heating rolls having a diameter of 20 cm, thereby obtaining a flame-resistant fiber bundle having a single-fiber density of 1.40 g/cm$^3$. The surface temperatures of the respective heating rolls of the heating roll group 1 were 240°C, 240°C, 260°C, and 260°C, respectively, in order in which the fiber bundle was brought into contact with the heating rolls. The surface temperatures of the respective heating rolls of the heating roll group 2 were 280°C, 280°C, 300°C, and 300°C, respectively, in order in which the fiber bundle was brought into contact with the heating rolls. The surface temperatures of the respective heating rolls of the heating roll group 3 were 310°C, 310°C, 320°C, 320°C, 330°C, 330°C, 340°C, and 340°C, respectively, in order in which the fiber bundle was brought into contact with the heating rolls. The contact time with each heating roll was set to 10 seconds, and the total contact time was set to 160 seconds. Incidentally, the single-fiber density after the fiber bundle passed through the heating roll group 1 and the single-fiber density after the fiber bundle passed through the heating roll group 2 were 1.33 g/cm$^3$ and 1.36 g/cm$^3$, respectively.

The flame-resistant fiber bundle thus obtained was introduced into a pre-carbonization furnace, and then heated, in a nitrogen atmosphere, at a highest temperature of 700°C and under strain with a tension of 0.1 cN/dTex, thereby obtaining a pre-carbonized fiber bundle. Incidentally, the temperature increase rate between temperatures of 300 to 500°C was 200°C/min, and the treatment time at 300°C or higher was 1.5 minutes.

The pre-carbonized fiber bundle thus obtained was introduced into a carbonization furnace, and then heated, in an inert gas atmosphere, at a highest temperature of 1350°C and under strain with a tension of 2.5 mN/dTex, thereby obtaining a carbonized fiber bundle. Incidentally, the temperature increase rate between temperatures of 1000 to 1300°C was 200°C/min, and the treatment time at 1000°C or higher was 1.5 minutes.

The carbonized fiber bundle thus obtained was subjected to the surface treatment and then applied with a sizing agent, thereby obtaining a carbon fiber bundle having a total fineness of 60,000 dTex. The characteristics of the resin-impregnated strand of this carbon fiber bundle were measured to be an elastic modulus of 260 GPa and a strength of 4.5 GPa. The amount of fluff was 2 pieces/m, and the fusion amount was 0 per 10,000 pieces.

(Example 14)

The number of heating rolls of the heating roll group 1 was set to 2, the number of heating rolls of the heating roll group 2 was set to 2, and the number of heating rolls of the heating roll group 2 was set to 4. The surface temperatures of the respective heating rolls of the heating roll group 1 were set to 240°C and 260°C, respectively, in order in which the fiber bundle was brought into contact with the heating rolls. The surface temperatures of the respective heating rolls of the heating roll group 2 were set to 280°C and 300°C, respectively, in order in which the fiber bundle was brought into contact with the heating rolls. The surface temperatures of the respective heating rolls of the heating roll group 3 were set to 310°C, 320°C, 330°C, and 340°C, respectively, in order in which the fiber bundle was brought into contact with the heating rolls. Further, the contact time with each heating roll was set to 10 seconds, and the total contact time was set to 80 seconds. A flame-resistant fiber bundle having a single-fiber density of 1.38 g/cm$^3$ was obtained in the same manner as in Example 13, except the above-described conditions. Incidentally, the single-fiber density after the fiber bundle passed through the heating roll group 1 and the single-fiber density after the fiber bundle passed through the heating roll group 2 were 1.32 g/cm$^3$ and 1.35 g/cm$^3$, respectively.

Subsequently, the pre-carbonization treatment, the carbonization treatment, and the surface treatment were performed in the same manner as in Example 13, thereby obtaining a carbon fiber bundle having characteristics of the resin-impregnated strand with an elastic modulus of 260 GPa and a strength of 4.3 GPa. Further, the amount of fluff was 0 piece/m, and the fusion amount was 1 per 10,000 pieces.

(Comparative Example 4)

A flame-resistant fiber bundle was obtained by performing the oxidation treatment only using the same hot air circulating method as in Example 13 while the heating treatment by the heating roll group was not performed. This fiber bundle was subjected to the pre-carbonization treatment in the same method as in Example 13, thereby obtaining a fiber bundle having a density of 1.33 g/cm$^3$. Subsequently, the carbonization treatment and the surface treatment were performed in the same manner as in Example 13, thereby obtaining a carbon fiber bundle having characteristics of the resin-impregnated strand with an elastic modulus of 240 GPa and a strength of 3.4 GPa. Further, the amount of fluff was 0 piece/m, and the fusion amount was 4 per 10,000 pieces.

(Comparative Example 5)

The precursor fiber bundle obtained by the same method as in Example 13 was introduced into a hot air circulating oven at a traveling speed of 0.9 m/min and a fiber-bundle density of 3,429 dTex/mm, and then heated in an air atmosphere having a temperature of 220 to 250°C and under strain with a tension of 2 mN/dTex, thereby obtaining a flame-resistant fiber bundle having a single-fiber density of 1.30 g/cm$^3$. Next, the fiber bundle was brought into contact with a heating roll having a temperature of 250°C by the contacting type treatment of Nelson method in such a manner that the contact time was 5 seconds per one contact and the contacting was made 120 times (the total contact time of 10 minutes), thereby obtaining a flame-resistant fiber bundle having a single-fiber density of 1.38 g/cm$^3$. Subsequently, the pre-carbonization treatment, the carbonization treatment, and the surface treatment were performed in the same manner as in Example 13, thereby obtaining a carbon fiber bundle having characteristics of the resin-impregnated strand with an elastic modulus of 260 GPa and a strength of 3.0 GPa. The amount of fluff was 50 pieces/m, and the fusion amount was 150 per 10,000 pieces.

(Comparative Example 6)

A carbon fiber bundle was obtained by performing the same treatment as in Comparative Example 5, except that the fiber bundle was brought into contact with a heating roll having a temperature of 250°C by the contacting type treatment of Nelson method in such a manner that the contact time was 0.5 second per one contact and the contacting was made 1,200 times (the total contact time of 10 minutes). The characteristics of the resin-impregnated strand of the carbon fiber bundle obtained were measured to be an elastic modulus of 210 GPa and a strength of 2.8 GPa. The amount of fluff was 80 pieces/m, and the fusion amount was 8 per 10,000 pieces.

(Example 15)

A DMAC solution (spinning dope) having 21.2% by mass of a PAN-based copolymer (the content of a carboxylic group being $7.0 \times 10^{-5}$ equivalent and the limiting viscosity [η] being 1.7) composed of 96% by mass of the AN unit, 3% by mass of the AAm unit, and 1% by mass of the MAA unit was prepared.

This spinning dope was discharged into the aqueous solution of DMAC (temperature of 38°C, solvent concentration of 68% by mass) through a spinneret having a pore size of 60 μm and a hole number of 30,000 and then was allowed to be coagulated. The coagulated fiber bundle thus obtained was drawn to 5.4 times while being desolvated in warm water having a temperature of 60°C to 98°C. The drawn threads obtained were immersed in an oil agent treatment bath filled with an oil treatment solution to be applied with an oil agent, and then subjected to dry densification using a heating roller having a temperature of 180°C, thereby obtaining a precursor fiber bundle having a single-fiber fineness of 2.0 dTex, a filament number of 30,000, and a total fineness of 60,000 dTex. Incidentally, the same oil treatment solution as in Example 1 was used as the oil treatment solution.

The following step was carried out as the first stabilization process. The precursor fiber bundle obtained by the above-described method was introduced into a hot air circulating oven at a traveling speed of 1.5 m/min and a fiber-bundle density of 3,500 dTex/mm, and then heated for 25 minutes in an air atmosphere having a temperature of 240 to 250°C and under strain with a tension of 0.1 cN/dTex, thereby obtaining a flame-resistant fiber bundle having a single-fiber density of 1.26 g/cm$^3$.

Subsequently, the following step was carried out as the second stabilization process. This fiber bundle was brought into contact sequentially with a heating roll group consisting of six heating rolls having a diameter of 60 cm, thereby obtaining a flame-resistant fiber bundle having a single-fiber density of 1.32 g/cm$^3$. The contact time with each heating roll was set to 20 seconds, and the fiber bundle was brought into contact with the heating rolls for 120 seconds in total. The surface temperatures of the respective heating rolls of the heating roll group were 250°C, 250°C, 270°C, 270°C, 300°C, and 300°C, respectively, in order in which the fiber bundle was brought into contact with the heating rolls. Further, at the time of this heat treatment, the fiber bundle between the second heating roll and the third heating roll was drawn to 2.5% at an "extending rate" calculated by the following expression, and then the fiber bundle between the fourth heating roll and the fifth heating roll was drawn to 2.5%, that is, the fiber bundle was drawn to 5% in total.

$$\text{Extending rate (\%)} = (V_{n+1} - V_n)/V_n \times 100 \cdots(12)$$

$V_n$: Traveling speed of n-th heating roll
$V_{n+1}$: Traveling speed of (n+1)-th heating roll

Next, the following step was carried out as the third stabilization process. The flame-resistant fiber bundle was introduced into a hot air circulating oven at a traveling speed of 1.7 m/min, and then heated for 15 minutes in an air atmosphere having a temperature of 260 to 270°C and under strain with a tension of 0.1 cN/dTex, thereby obtaining a flame-resistant fiber bundle having a single-fiber density of 1.40 g/cm$^3$. Incidentally, the total time for the stabilization process was 42 minutes.

The flame-resistant fiber bundle thus obtained was introduced into a pre-carbonization furnace, and then heated for 1 minute in a nitrogen atmosphere having a highest temperature of 600°C and under strain with a tension of 0.1 cN/dTex, thereby obtaining a pre-carbonized fiber bundle. Incidentally, the temperature increase rate between temperatures of 400 to 600°C was 200°C/min.

The pre-carbonized fiber bundle thus obtained was introduced into a carbonization furnace, and then heated for 1 minute in a nitrogen atmosphere having a highest temperature of 1350°C and under strain with a tension of 0.1 N/dTex, thereby obtaining a carbonized fiber bundle. Incidentally, the temperature increase rate between temperatures of 1200 to 1350°C was 400°C/min.

The carbonized fiber bundle thus obtained was subjected to the surface treatment and then applied with a sizing agent, thereby obtaining a carbon fiber bundle having a total fineness of 34,000 dTex. The characteristics of the resin-impregnated strand of this carbon fiber bundle were measured to be an elastic modulus of 245 GPa and a strength of 4.3 GPa. Further, the amount of fluff was 7 pieces/m.

(Examples 16 to 18)

A carbon fiber bundle was obtained in the same manner as in Example 15, except that the extending rates of the fiber bundle by the heating roll groups in the second stabilization process were changed to 1.0%, 10%, and 15%, respectively.

(Example 19)

The heating roll group used in the second stabilization process was configured by three heating rolls, and the surface temperatures of these heating rolls were set to 270°C, 273°C, and 280°C, respectively, in order in which the fiber bundle was brought into contact with the heating rolls. Further, the total contact time between the heating roll group and the fiber bundle was changed to 30 seconds (the contact time with each heating roll being 10 seconds). A carbon fiber bundle was obtained in the same manner as in Example 15, except the above-described conditions.

(Example 20)

The heating roll group used in the second stabilization process was configured by two heating rolls, and the surface temperatures of these heating rolls were set to 270°C and 300°C, respectively, in order in which the fiber bundle was brought into contact with the heating rolls. Further, the total contact time between the heating roll group and the fiber bundle was changed to 10 seconds (the contact time with each heating roll being 5 seconds). A carbon fiber bundle was obtained in the same manner as in Example 15, except the above-described conditions.

(Comparative Example 7)

The stabilization treatment was performed in the same manner as in Example 15, except that time for the heating treatment in the first stabilization process was changed to 20 minutes. The single-fiber density of the fiber bundle heated in the first stabilization process was 1.23 g/cm$^3$. Since the fiber bundle was wound on the heating roll when the fiber bundle was brought into contact with the heating roll in the second stabilization process, subsequent steps could not be performed and thus a carbon fiber bundle could not be obtained. Based on this Comparative Example, it was possible to confirm the influence of the fiber density in the first stabilization process (atmosphere heating) on the processability in the second stabilization process (heating roll). When compared with Examples 15 to 20, the heating time was as short as 20 minutes and the single-fiber density was as low as 1.23 g/cm$^3$. Therefore, the winding of the fiber bundle on the heating roll occurred.

(Example 21)

An acrylic copolymer having a copolymer composition in which the AN unit is 98 mol%, 2-hydroxyethyl methacrylate (hereinafter, abbreviated to "HEMA") is 2.0 mol%, and a specific viscosity is 0.21 was dissolved in DMAC to prepare a spinning dope having a polymer concentration of 21 % by mass.

This spinning dope which was adjusted to a temperature of 60°C was discharged into the aqueous solution of DMAC (temperature of 25°C, solvent concentration of 45% by mass) through a spinneret having a pore size of 75 $\mu$m and a hole number of 24,000 and then was allowed to be coagulated. The coagulated fiber bundle thus obtained was drawn with washing and drawn with heating to be drawn to 7.4 times in total, thereby obtaining an acrylic precursor fiber bundle. The single-fiber fineness of the fiber bundle was 2.5 dTex.

The following step was carried out as the first stabilization process. This precursor fiber bundle was introduced into a hot air circulating oven at a traveling speed of 0.9 m/min and a fiber-bundle density of 3,429 dTex/mm, and then heat-treated for 40 minutes in an air atmosphere having a temperature of 240°C to 260°C and under strain with a tension of 0.1 cN/dTex. In this way, a flame-resistant fiber bundle having a single-fiber density of 1.29 g/cm$^3$ was obtained.

Subsequently, the following step was carried out as the second stabilization process. This fiber bundle was brought into contact sequentially with a heating roll group consisting of six heating rolls having a diameter of 20 cm, thereby obtaining a flame-resistant fiber bundle having a single-fiber density of 1.41 g/cm$^3$. The surface temperatures of the respective heating rolls of the heating roll group 1 were 270°C, 280°C, 290°C, 300°C, 330°C, and 360°C, respectively, in order in which the fiber bundle was brought into contact with the heating rolls. The contact time with each heating roll was set to 20 seconds, and the total contact time was set to 120 seconds. The extending rate in this step was set to 5%.

The degree of orientation $\pi$ of the flame-resistant fiber bundle thus obtained was 69.3%, and the ratio "A/S $\times$ 100%" of areas at the spectrum, which was obtainable by solid state $^{13}$C-NMR, was 14.3%.

This flame-resistant fiber bundle was introduced into a pre-carbonization furnace, and then heated for 1 minute, in a nitrogen atmosphere, at a highest temperature of 660°C and under strain with a tension of 0.1 N/dTex. The pre-carbonized fiber bundle obtained was introduced into a carbonization furnace, and then heated for 1 minute, in a nitrogen atmosphere, at a highest temperature of 1350°C and under strain with a tension of 0.1 N/dTex, thereby obtaining a carbonized fiber bundle. The carbonized fiber bundle obtained was subjected to the surface treatment and then applied with a sizing agent, thereby obtaining a carbon fiber bundle. The extending rate of the carbonization step from the stabilization process was -1.5%. The characteristics of the resin-impregnated strand of this carbon fiber bundle were measured to be an elastic modulus of 240 GPa.

(Examples 22 and 23, and Comparative Example 8)

In Examples 22 and 23, and Comparative Example 8, the treatment was performed using a precursor fiber bundle obtained in the same manner as in Example 21 under the stabilization treatment conditions presented in Table 6. The flame-resistant fiber bundle thus obtained was subjected to the pre-carbonization treatment, the carbonization treatment, the surface treatment, and the sizing treatment under the same conditions as in Example 21 to obtain a carbon fiber bundle. The degrees of orientation of these flame-resistant fibers, the area ratios at the peak in the vicinity of 135 ppm, and the carbon fiber elastic moduli are presented in Table 7.

(Examples 24 to 26)

In Examples 24 to 26, a precursor fiber bundle was obtained in the same manner as in Example 21, except that the hole number of the spinneret was set to 28,000, and the discharge amount was adjusted such that the single-fiber fineness was 2.63 dTex. These precursor fiber bundles were treated under the stabilization treatment conditions presented in Table 6. The flame-resistant fiber bundle obtained was subjected to the pre-carbonization treatment, the carbonization treatment, the surface treatment, and the sizing treatment under the same conditions as in Example 21 to obtain a carbon fiber bundle. The degrees of orientation $\pi$ of these flame-resistant fibers, the area ratios "A/S $\times$ 100%," and the strand elastic moduli of the carbon fiber bundle are presented in Table 7.

When Examples 21 to 26 were compared with Comparative Example 8, in the case of satisfying the conditions in which the degree of orientation $\pi$ was 68% to 74% and "A/S$\times$100%" was 14% to 17%, it was found that the strand elastic modulus became larger than 230 GPa.

When Examples 21, 22, and 24 were compared with Examples 23 to 26, in the case of satisfying the conditions in which the degree of orientation $\pi$ was 70% to 72% and "A/S $\times$ 100%" was 14.5% to 16%, it was found that the strand elastic modulus further increased.

(Example 27)

A copolymer composed of 98 mol% of the AN unit and 2 mol% of the HEMA unit was dissolved in DMAC to prepare a solution (spinning dope) having a concentration of 22% by mass. This spinning dope was discharged into the aqueous solution of DMAC (temperature of 35°C, solvent concentration of 45%) through a spinneret having a pore size of 75 $\mu$m and a hole number of 28,000 and then was allowed to be coagulated. The coagulated fiber bundle thus obtained was washed with water and then drawn, and was immersed in an oil agent treatment bath filled with an oil treatment solution to be applied with an oil agent. Thereafter, this fiber bundle was dried to obtain a precursor fiber bundle having a single-fiber fineness of 2.5 dTex and a total fineness of 70,000 dex. The cross-sectional shapes of these precursor fibers were a fiber bundle consisting of a single fiber group having a kidney-type cross-section. Incidentally, as the oil treatment solution, the same oil treatment solution as in Example 1 was used.

<First Stabilization process>

The following step was carried out as the first stabilization process. This precursor fiber bundle was introduced into a hot air circulating oven at a traveling speed of 0.3 m/min and a fiber-bundle density of 4,487 dTex/mm, and then heat-treated for 52 minutes in an air atmosphere having a temperature of 237 to 245°C and under strain with a tension of 0.1 cN/dTex. In this way, the flame-resistant fiber bundle (1) was obtained in which a single-fiber density was 1.340 g/cm$^3$, a variation coefficient CV of the density was 0.30%, a blackening degree was 72%, and a variation coefficient CV of the blackening degree was 14.7%. The single fiber group configuring the flame-resistant fiber bundle obtained had a kidney-type cross-sectional shape having a length of major axis a of 20.46 $\mu$m, a length of minor axis b of 12.82 $\mu$m, a groove depth c of 1.14 $\mu$m, and an aspect ratio a/b of 1.60.

<Second Stabilization process>

Subsequently, the following step was carried out as the second stabilization process. This fiber bundle was brought into contact sequentially with a heating roll group consisting of six heating rolls having a diameter of 20 cm. The surface temperatures of the respective heating rolls of the heating roll group were 269°C, 280°C, 315°C, 315°C, 315°C, and 315°C, respectively, in order in which the fiber bundle was brought into contact with the heating rolls. The contact time with each heating roll was 10 seconds, and the total contact time was 60 seconds. In this way, a flame-resistant fiber bundle (2) was obtained in which a single-fiber density was 1.384 g/cm$^3$, a variation coefficient CV of the density was 0.13%, a blackening degree was 77%, and a variation coefficient CV of the blackening degree was 13.7%. Incidentally, the total time for the stabilization process was 53 minutes. The cross-sectional shape of the single fiber group configuring the flame-resistant fiber bundle obtained had a kidney-type cross-sectional shape having a length of major axis a of 19.1 $\mu$m, a length of minor axis b of 12.34 $\mu$m, a groove depth c of 0.98 $\mu$m, and an aspect ratio a/b of 1.55.

(Examples 28 to 32)

The stabilization treatment was performed in the same manner as in Example 27, except that the treatment time for the first stabilization process, and the treatment temperature and the treatment time for the second stabilization process were changed to the conditions presented in Table 8. The evaluation results were collectively described in Table 8 and Table 9.
As presented in Table 8, in Examples 27 to 32, the variation coefficient CV of the density of the flame-resistant fiber bundle after the treatment of the second stabilization process was completed was 0.2% or less. Further, the blackening degree of each of the single fibers configuring the flame-resistant fiber bundle was 70% or more.

(Comparative Example 9)

This comparative example is an example in which the second stabilization process is omitted. The precursor fiber bundle obtained in the same manner as in Example 27 was used as the precursor fiber bundle. This precursor fiber bundle was introduced into a hot air circulating stabilization oven at a traveling speed of 0.4 m/min and a fiber-bundle density of 4,487 dTex/mm, and then heat-treated for 90 minutes in an air atmosphere having a temperature of 237 to 262°C and under strain with a tension of 0.1 cN/dTex. Thus, a flame-resistant fiber bundle was obtained in which a single-fiber density was 1.392 g/cm$^3$, a variation coefficient CV of the density was 0.27%, a blackening degree was 71%, and a variation coefficient CV of the blackening degree was 16.7%. The single fiber group configuring the flame-resistant bundle obtained had a kidney-type cross-section having a length of major axis a of 20.06 $\mu$m, a length of minor axis b of 12.38 $\mu$m, a groove depth c of 0.81 $\mu$m, and an aspect ratio a/b of 1.62. In this Comparative Example, the stabilization treatment using a heater was not performed, and as a result, the variation coefficient CV of the density of the flame-resistant fiber bundle was 0.27%.

(Comparative Example 10)

The treatment was performed in the same manner as in Comparative Example 9, except that the temperature and the treatment time for the first stabilization process were changed to the conditions presented in Table 8. The results were collectively described in Table 8. Although the time for the stabilization treatment was as short as 52 minutes, the flame-resistant fiber bundles obtained in Examples 27 to 32 yielded less density unevenness of the flame-resistant fiber bundle as compared with Comparative Examples 9 and 10 in which the stabilization time was as long as 70 to 90 minutes.

(Example 33)

A precursor fiber bundle obtained in the same manner as in Example 27 was used as the precursor fiber bundle.

<First Stabilization process>

The following step was carried out as the first stabilization process. This precursor fiber bundle was introduced into a hot air circulating oven at a traveling speed of 0.4 m/min and a fiber-bundle density of 4,487 dTex/mm, and then heat-treated for 90 minutes in an air atmosphere having a temperature of 230 to 260°C and under strain with a tension of 0.1 cN/dTex. In this way, a flame-resistant fiber bundle was obtained in which a single-fiber density was 1.392 g/cm$^3$, a variation coefficient CV of the density was 0.27%, a blackening degree was 71%, and a variation coefficient CV of the blackening degree was 16.7%.

<Second Stabilization process>

Subsequently, the following step was carried out as the second stabilization process. This fiber bundle was brought into contact sequentially with a heating roll group consisting of six heating rolls having a diameter of 60 cm. The surface temperatures of the respective heating rolls of the heating roll group were 268°C, 268°C, 268°C, 268°C, 268°C, and 280°C, respectively, in order in which the fiber bundle was brought into contact with the heating rolls. The contact time with each heating roll was 10 seconds, and the total contact time was 60 seconds. In this way, a flame-resistant fiber bundle was obtained in which a single-fiber density was 1.401 g/cm$^3$, a variation coefficient CV of the density was 0.18%, a blackening degree was 74%, and a variation coefficient CV of blackening degree was 14.9%. Incidentally, the total time for the stabilization process was 90 minutes.
This flame-resistant fiber bundle was introduced into a pre-carbonization furnace, and then heated for 1 minute, in a nitrogen atmosphere, at a highest temperature of 600°C and under strain with a tension of 0.1 cN/dTex, thereby obtaining a pre-carbonized fiber bundle. Incidentally, the temperature increase rate between temperatures of 400 to 500°C was 200°C/min. The extending rate of the pre-carbonization step was set to 3%.
The pre-carbonized fiber bundle obtained was introduced into a carbonization furnace, and then heated for 1 minute, in a nitrogen atmosphere, at a highest temperature of 1350°C and under strain with a tension of 0.1 cN/dTex, thereby obtaining a carbonized fiber bundle. Incidentally, the temperature increase rate between temperatures of 1000 to 1200°C was 400°C/min. The extending rate of the carbonization step was set to -4.5%.
A carbon fiber bundle having a low frequency of fluff generation in the producing step and with high grade was obtained. The carbonized fiber bundle obtained was subjected to the surface treatment and then applied with a sizing agent, thereby obtaining a carbon fiber bundle. The characteristics of the resin-impregnated strand of this carbon fiber bundle were measured to be an elastic modulus of 238 GPa and a strength of 3.7 GPa. The cross-section of each of the single fibers configuring the carbon fiber bundle was a kidney-type cross-section having a length of major axis a of 13.32 μm, a length of minor axis b of 8.62 μm, a groove depth c of 0.90 μm, and an aspect ratio a/b of 1.55.

(Examples 34 to 40)

The stabilization treatment was performed in the same manner as in Example 33, except that the treatment time for the first stabilization process, and the treatment temperature and the treatment time for the second stabilization process were changed to the conditions presented in Table 10. The evaluation results were collectively described in Table 11. In all Examples, a carbon fiber bundle having a low frequency of fluff generation in the producing step and with high grade was obtained.

**EP 2 905 364 A1**

(Comparative Example 11)

A precursor fiber bundle having a single-fiber fineness of 2.5 dTex and a total fineness of 70,000 dex was obtained in the same manner as in Example 33, except that an aqueous solution of DMAC having a solvent concentration of 60% was used as a congealed liquid. The cross-section of each of the fibers configuring the fiber bundle obtained was an elliptical cross-section having an aspect ratio a/b of 1.25, the elliptical cross-section being a shape formed by slightly flattening a circle. Subsequently, a carbon fiber bundle was produced by performing the stabilization treatment, the pre-carbonization treatment, and the carbonization treatment, in the same manner as in Example 33. The evaluation results were collectively described in Table 11. The strand strength and the strand elastic modulus of the carbon fiber bundle obtained were inferior as compared with Examples 33 to 40.

TABLE. 1

| | First stabilization process | | | Second stabilization process | | | | | |
|---|---|---|---|---|---|---|---|---|---|
| | Time (min) | Temperature (°C) | Density $\rho_{F1}$ (g/cm³) | Total time* (sec) | Number of heating rolls (number) | Time** (sec) | Temperature (°C) | Density $\rho_{F2}$ (g/cm³) | $(\rho_{F1} - 1.21)\times t1$ |
| Example 1 | 40 | 230 to 250 | 1.30 | 60 | 6 | 10.0 | 300 to 379 | 1.41 | 5.4 |
| Example 2 | 33 | 230 to 245 | 1.28 | 90 | 6 | 15.0 | 280 to 377 | 1.41 | 6.3 |
| Example 3 | 50 | 230 to 257 | 1.33 | 40 | 6 | 6.7 | 310 to 377 | 1.41 | 4.8 |
| Example 4 | 57 | 230 to 262 | 1.35 | 25 | 5 | 5.0 | 330 to 374 | 1.41 | 3.5 |
| Example 5 | 30 | 235 to 255 | 1.30 | 60 | 6 | 10.0 | 300 to 379 | 1.41 | 5.4 |
| Example 6 | 40 | 230 to 250 | 1.30 | 40 | 6 | 6.7 | 230 to 250 | 1.41 | 3.6 |
| Example 7 | 40 | 230 to 250 | 1.30 | 100 | 6 | 16.7 | 300 to 361 | 1.41 | 9.0 |
| Example 8 | 50 | 230 to 257 | 1.33 | 15 | 6 | 2.5 | 320 to 400 | 1.41 | 1.8 |
| Example 9 | 50 | 230 to 257 | 1.33 | 25 | 5 | 5.0 | 320 to 390 | 1.41 | 3.0 |
| Example 10 | 40 | 230 to 250 | 1.30 | 50 | 5 | 10.0 | 300 to 361 | 1.39 | 4.5 |
| Example 11 | 20 | 243 to 264 | 1.30 | 60 | 6 | 10.0 | 300 to 379 | 1.41 | 5.4 |
| Example 12 | 40 | 230 to 250 | 1.30 | 100 | 8 | 18.8 | 291 to 351 | 1.41 | 13.5 |
| Comparative Example 1 | 27 | 230 to 240 | 1.25 | 60 | 6 | 10.0 | 280 to 394 | 1.41 | 3.0 |
| Comparative Example 2 | 27 | 230 to 240 | 1.25 | 120 | 6 | 20.0 | 280 to 372 | 1.41 | 6.0 |
| Comparative Example 3 | 40 | 230 to 250 | 1.30 | 9 | 5 | 1.8 | 350 to 400 | - | 0.8 |

Density $\rho_{F1}$: Single-fiber density after first stabilization process
Density $\rho_{F2}$: Single-fiber density after second stabilization process
Total time*: Total contact time with heating rolls
Time**: Contact time per heating roll
$(\rho F1 - 1.21) \times t1$: Value of exppession (4)

Table.2

| | Carbonization yield (%) | Carbon fiber bundle | | |
| --- | --- | --- | --- | --- |
| | | Strength (GPa) | Elastic modulus (GPa) | Fluff |
| Example 1 | 55.1 | 4.8 | 235 | A |
| Example 2 | 55.4 | 4.6 | 230 | A |
| Example 3 | 54.8 | 4.7 | 245 | A |
| Example 4 | 54.4 | 4.5 | 245 | A |
| Example 5 | 54.4 | 4.7 | 230 | A |
| Example 6 | 53.8 | 4.6 | 235 | A |
| Example 7 | 54.1 | 4.5 | 235 | A |
| Example 8 | 53.4 | 4.5 | 240 | A |
| Example 9 | 54.1 | 4.6 | 245 | A |
| Example 10 | 53.4 | 4.8 | 240 | A |
| Example 11 | 54.1 | 4.2 | 220 | B |
| Example 12 | 54.1 | 4.0 | 230 | C |
| Comparative Example 1 | - | - | - | - |
| Comparative Example 2 | 55.1 | 3.5 | 210 | C |
| Comparative Example 3 | - | - | - | - |

Table. 3

| | First stabilization process | | | Second stabilization process | | | | Carbon fiber bundle | | | | Remark |
|---|---|---|---|---|---|---|---|---|---|---|---|---|
| | Temperature (°C) | Time (min) | Density $\rho_{F1}$ (g/cm$^3$) | Contact number (times) | Temperature (°C) | Total time* (sec) | Density $\rho_{F2}$ (g/cm$^3$) | Strength (Gpa) | Elastic modulus (Gpa) | Fusion amount (per 10,000 pieces) | Amount of fluff (piece/m) | |
| Example 13 | 220 to 250 | 40 | 1.30 | 16 | 240, 260, 280, 300 310, 20, 330, 340 | 160 | 1.4 | 4.5 | 260 | 0 | 2 | |
| Example 14 | 220 to 250 | 40 | 1.30 | 8 | 240, 260, 280, 300 310, 320, 330, 340 | 80 | 1.38 | 4.3 | 260 | 1 | 0 | |
| Comparative Example 4 | 220 to 250 | 40 | 1.30 | - | - | - | - | 3.4 | 260 | 4 | 0 | Hot air circulating method |
| Comparative Example 5 | 220 to 250 | 40 | 1.30 | 120 | 250 | 600 | 1.38 | 3.0 | 260 | 150 | 50 | Hot air circulating methods + Nelson method |
| Comparative Example 6 | - | - | - | 1200 | 250 | 600 | - | 2.8 | 210 | 8 | 80 | Nelson method |

Density $\rho_{F1}$: Single-fiber density after first stabilization process
Density $\rho_{F2}$: Single-fiber density after second stabilization process
Total time*: Total contact time with heating rolls

Table. 4

| | First stabilization proces | | | Second stabilization proces | | | | | | Third stabilization proces | | | Total time for stabilization(min) |
|---|---|---|---|---|---|---|---|---|---|---|---|---|---|
| | Time | Temperature | Density $\rho_{F1}$ | Total time * | Number of heating rolls | Time** | Temperature (°C) | | Extending rate $E_H$ | Time | Temperature | Density $\rho_{F3}$ | |
| | | | | | | | First stage | Final stage | | | | | |
| | (min) | (°C) | (g/cm$^3$) | (sec) | (number) | (sec) | | | (%) | (min) | (°C) | (g/cm$^3$) | |
| Example 15 | 25 | 240 to 250 | 1.26 | 120 | 6 | 20 | 250 | 300 | 5 | 15 | 260 to 270 | 1.40 | 42.0 |
| Example 16 | 25 | 240 to 250 | 1.26 | 120 | 6 | 20 | 250 | 300 | 1 | 15 | 260 to 270 | 1.38 | 42.0 |
| Example 17 | 25 | 240 to 250 | 1.26 | 120 | 6 | 20 | 250 | 300 | 10 | 15 | 260 to 270 | 1.40 | 42.0 |
| Example 18 | 25 | 240 to 250 | 1.26 | 120 | 6 | 20 | 250 | 300 | 15 | 15 | 260 to 270 | 1.40 | 42.0 |
| Example 19 | 25 | 240 to 250 | 1.26 | 30 | 3 | 10 | 270 | 280 | 5 | 15 | 260 to 270 | 1.38 | 40.5 |
| Example 20 | 25 | 240 to 250 | 1.26 | 10 | 2 | 5 | 270 | 300 | 5 | 15 | 260 to 270 | 1.36 | 40.2 |
| Comparative Example 7 | 20 | 240 to 250 | 1.23 | 120 | 6 | 20 | 250 | 300 | 5 | - | - | - | - |

Density $\rho_{F1}$: Single-fiber density after first stabilization proces
Density $\rho_{F3}$: Single-fiber density after first stabilization proces
Total time*: Total contact time with heating rolls
Time**: Contact time per heating roll

Table 5

| | Processability of stabilization proces | Carbon fiber bundle | | |
|---|---|---|---|---|
| | | Strength (GPa) | Elastic modulus (GPa) | Fluff |
| Example 15 | No abnormality | 4.3 | 245 | A |
| Example 16 | No abnormality | 4.0 | 235 | A |
| Example 17 | No abnormality | 4.3 | 250 | A |
| Example 18 | No abnormality | 4.2 | 265 | A |
| Example 19 | No abnormality | 4.1 | 245 | A |
| Example 20 | No abnormality | 3.9 | 240 | A |
| Comparative Example 7 | Winding on heating roll | - | - | - |

Table. 6

| | Precursor fiber bundle | | First stabilization process | | | Second stabilization process | | | | |
|---|---|---|---|---|---|---|---|---|---|---|
| | Single-fiber fineness (dtex) | Filament number (number) | Temperature (°C) | Time (min) | Density $\rho_{F1}$ (g/cm$^3$) | Number of heating rolls (number) | Heating roll temperature (°C) | Total time** (sec) | Extending rate $E_H$ (%) | Density $\rho_{F2}$ (g/cm$^3$) |
| Example 21 | 2.5 | 24000 | 240 to 260 | 40 | 1.29 | 6 | 270/280/290/300/330/360 | 120 | 5 | 1.40 |
| Example 22 | 2.5 | 24000 | 240 to 260 | 40 | 1.29 | 6 | 270/280/290/300/330/360 | 120 | 10 | 1.40 |
| Example 23 | 2.5 | 24000 | 240 to 260 | 40 | 1.29 | 6 | 270/280/290/300/330/360 | 120 | 0 | 1.40 |
| Example 24 | 2.63 | 28000 | 240 to 250 | 70 | 1.31 | 6 | 270/280/290/300/320/320 | 120 | 5 | 1.39 |
| Example 25 | 2.63 | 28000 | 240 to 250 | 70 | 1.31 | 6 | 270/290/320/320/340/340 | 120 | 5 | 1.39 |
| Example 26 | 2.63 | 28000 | 240 to 250 | 70 | 1.31 | 6 | 270/280/290/300/330/360 | 120 | 5 | 1.39 |
| Comparative Example 8 | 2.5 | 24000 | 240 to 260 | 30 | 1.25 | 4 | 270/290/330/360 | 60 | 5 | 1.37 |

Density $\rho_{F1}$: Single-fiber density after first stabilization process
Density $\rho_{F2}$: Single-fiber density after second stabilization process
Total time**: Total contact time with heating rolls

EP 2 905 364 A1

Table 7

| | Flame-resistant fiber | | Carbon fiber bundle |
|---|---|---|---|
| | A/S'100 (%) | Degree of orientation p (%) | Elastic modulus (GPa) |
| Example 21 | 14.3 | 69.3 | 240 |
| Example 22 | 14.3 | 70.2 | 239 |
| Example 23 | 14.5 | 68.7 | 232 |
| Example 24 | 14.3 | 70.0 | 237 |
| Example 25 | 14.8 | 70.4 | 240 |
| Example 26 | 15.8 | 71.1 | 242 |
| Comparative Example 8 | 13.1 | 67.9 | 220 |

Table.8

| | First stabilization process | | Second stabilization process | | Total time for stabilization (min) | Flame-resistant fiber after first stabilization process | | | | Flame-resistant fiber after second stabilization process | | | |
|---|---|---|---|---|---|---|---|---|---|---|---|---|---|
| | Time (min) | Temperature °C | Total time* (min) | Temperature (°C) | | Density $\rho_{F1}$ (g/cm$^3$) | CV | Blackening | CV | Density $\rho_{F2}$ (g/cm$^3$) | CV | Blackening | CV |
| Example 27 | 52 | 237 to 245 | 1 | 269/280/315/315/315/315 | 53 | 1.340 | 0.30% | 72% | 14.7% | 1.384 | 0.13% | 77% | 13.7% |
| Example 28 | 48 | 237 to 245 | 1 | 269/280/322/322/322/322 | 49 | 1.329 | 0.24% | 70% | 15.0% | 1.38 | 0.09% | 80% | 10.7% |
| Example 29 | 43 | 237 to 245 | 1 | 269/280/330/330/330/330 | 44 | 1.321 | 0.25% | 67% | 17.7% | 1.389 | 0.12% | 77% | 11.3% |
| Example 30 | 38 | 237 to 245 | 1 | 269/280/338/338/338/338 | 39 | 1.308 | 0.22% | 70% | 14.2% | 1.399 | 0.09% | 82% | 14.0% |
| Example 31 | 33 | 237 to 245 | 1 | 269/280/345/345/345/345 | 34 | 1.296 | 0.19% | 67% | 16.4% | 1.402 | 0.11% | 78% | 10.6% |
| Example 32 | 29 | 237 to 245 | 1 | 269/280/353/353/353/353 | 30 | 1.283 | 0.17% | 68% | 16.0% | 1.407 | 0.06% | 85% | 10.8% |
| Comparative Example 9 | 90 | 237 to 262 | - | - | 90 | 1.392 | 0.27% | 71% | 16.7% | - | - | - | - |
| Comparative Example 10 | 70 | 237 to 249 | - | - | 70 | 1.350 | 0.27% | 71% | 13.4% | - | - | - | - |

Total time*: Total contact time with heating rolls

Density $\rho_{F1}$: Single-fiber density after first stabilization process

Density $\rho_{F2}$: Single-fiber density after second stabilization process

Table 9

| | Flame-resistant fiber after first stabilization process | | | | | | | | Flame-resistant fiber after second stabilization process | | | | | | | |
| | Length (mm) | | | | CV | | | | Length (mm) | | | | CV | | | |
| | a | b | c | a/b | a | b | c | a/b | a | b | c | a/b | a | b | c | a/b |
| Example 27 | 20.5 | 12.8 | 1.14 | 1.60 | 3.5% | 5.8% | 41.0% | 6.41% | 19.1 | 12.3 | 0.98 | 1.55 | 5.3% | 5.9% | 53.9% | 6.83% |
| Example 28 | 19.5 | 12.2 | 0.83 | 1.61 | 4.2% | 7.0% | 61.1% | 7.57% | 19.7 | 12.0 | 0.84 | 1.64 | 4.3% | 4.4% | 56.5% | 4.68% |
| Example 29 | 20.4 | 12.6 | 1.11 | 1.62 | 4.3% | 3.5% | 30.1% | 5.55% | 19.0 | 11.6 | 0.89 | 1.65 | 4.6% | 6.2% | 42.8% | 6.40% |
| Example 30 | 18.5 | 12.3 | 1.32 | 1.51 | 5.9% | 5.2% | 18.5% | 4.36% | 19.2 | 12.0 | 1.13 | 1.61 | 4.2% | 4.8% | 27.7% | 5.62% |
| Example 31 | 19.8 | 12.5 | 0.99 | 1.60 | 5.2% | 7.3% | 62.7% | 8.59% | 18.6 | 12.0 | 1.00 | 1.56 | 5.3% | 4.4% | 39.3% | 5.71% |
| Example 32 | 20.9 | 12.8 | 0.88 | 1.63 | 6.3% | 5.3% | 62.9% | 8.86% | 19.0 | 11.7 | 1.08 | 1.63 | 4.4% | 6.0% | 39.4% | 6.91% |
| Comparative Example 9 | 20.1 | 12.4 | 0.81 | 1.62 | 5.0% | 5.3% | 58.1% | 7.40% | - | - | - | - | - | - | - | - |
| Comparative Example 10 | 20.5 | 12.5 | 1 | 1.65 | 4.2% | 5.1% | 44.3% | 6.90% | - | - | - | - | - | - | - | - |

Table 10

| | First stabilization process | | Second stabilization process | | Total time for stabilizatio (min) | Flame-resistant fiber after first stabilization process | | | | Flame-resistant fiber after second stabilization process | | | |
|---|---|---|---|---|---|---|---|---|---|---|---|---|---|
| | Time (min) | Temperature (°C) | Total time* (min) | Temperature °C | | Density $\rho_{F1}$ (g/cm$^3$) | CV | Blackening | CV | Density $\rho_{F2}$ (g/cm$^3$) | CV | Blackening | CV |
| Example 33 | 90 | 237 to 262 | 1 | 269/280/268.268/268/268 | 91 | 1.392 | 0.27% | 71% | 16.7% | 1.401 | 0.18% | 74% | 14.92% |
| Example 34 | 70 | 237 to 249 | 1 | 269/280/299/299/299/299 | 71 | 1.350 | 0.27% | 71% | 13.4% | 1.375 | 0.16% | 71% | 13.41% |
| Example 35 | 52 | 237 to 245 | 1 | 269/280/315/315/315/315 | 53 | 1.340 | 0.30% | 72% | 14.7% | 1.384 | 0.13% | 77% | 13.72% |
| Example 36 | 48 | 237 to 245 | 1 | 269/280/322/322/322/322 | 49 | 1.329 | 0.24% | 70% | 15.0% | 1.380 | 0.09% | 80% | 10.69% |
| Example 37 | 43 | 237 to 245 | 1 | 269/280/330/330/330/330 | 44 | 1.321 | 0.25% | 67% | 17.7% | 1.389 | 0.12% | 77% | 11.31% |
| Example 38 | 38 | 237 to 245 | 1 | 269/280/338/338/338/338 | 39 | 1.308 | 0.22% | 70% | 14.2% | 1.399 | 0.09% | 82% | 13.95% |
| Example 39 | 33 | 237 to 245 | 1 | 269/280/345/345/345/345 | 34 | 1.296 | 0.19% | 67% | 16.4% | 1.402 | 0.11% | 78% | 10.63% |
| Example 40 | 29 | 237 to 245 | 1 | 269/280/353/353/353/353 | 30 | 1.283 | 0.17% | 68% | 16.0% | 1.407 | 0.06% | 85% | 10.76% |
| Comparative Example 11 | 48 | 237 to 245 | 1 | 269/280/322/322/322/322 | 49 | 1.320 | 0.27% | 51% | 17.2% | 1.370 | 0.13% | 55% | 12.30% |

Total time*: Total contact time with heating rolls

Density $\rho_{F1}$: Single-fiber density after first stabilization process

Density $\rho_{F2}$: Single-fiber density after second stabilization process

Table 11

| | Cross-sectional shape of carbon fiber | | | | | | | | Carbon fiber bundle | | Weight basis of carbon fiber bundle (g/m) | Carbonizat ion yield (%) |
| | Length (mm) | | | | CV | | | | Strength (GPa) | Elastic modulus (GPa) | | |
| | a | b | c | a/b | a | b | c | a/b | | | | |
| Example 33 | 13.3 | 8.6 | 0.90 | 1.55 | 6.0% | 10.7% | 39.4% | 11.30% | 3.71 | 238 | 3.9838 | 58.9% |
| Example 34 | 12.6 | 8.0 | 0.74 | 1.59 | 6.1% | 6.2% | 44.6% | 8.12% | 3.76 | 243 | 3.7522 | 55.5% |
| Example 35 | 12.7 | 7.9 | 0.80 | 1.61 | 5.1% | 5.1% | 41.9% | 7.29% | 4.04 | 242 | 3.7544 | 55.5% |
| Example 36 | 12.9 | 7.7 | 0.78 | 1.67 | 4.2% | 5.4% | 50.8% | 7.10% | 4.24 | 245 | 3.6022 | 53.3% |
| Example 37 | 12.3 | 7.8 | 1.36 | 1.59 | 5.9% | 6.5% | 18.7% | 7.73% | 4.02 | 240 | 3.7442 | 55.4% |
| Example 38 | 13.5 | 7.9 | 1.58 | 1.71 | 5.4% | 6.4% | 25.5% | 10.15% | 3.92 | 230 | 3.8370 | 56.7% |
| Example 39 | 13.0 | 8.5 | 1.83 | 1.53 | 10.4% | 10.9% | 28.0% | 20.56% | 3.97 | 227 | 3.7378 | 55.5% |
| Example 40 | 11.6 | 8.4 | 2.11 | 1.38 | 8.6% | 7.4% | 21.2% | 13.51% | 3.68 | 221 | 3.6518 | 54.0% |
| Comparative Example 11 | 12.9 | 7.7 | 0.78 | 1.23 | 4.2% | 5.2% | 33.6% | 10.20% | 2.96 | 196 | 3.6022 | 53.3% |

INDUSTRIAL APPLICABILITY

According to the flame-resistant fiber bundle of the invention, it is possible to provide a flame-resistant fiber product (for example, a fire-retardant cloth and flame-resistant curtain) that is excellent in workability and is cheap with high quality, and a carbon fiber bundle that is excellent in workability and is cheap with high quality.

According to the carbon fiber bundle of the invention, it is possible to provide a composite material product (for sport application, leisure application, aircraft application, general industrial application, or the like) that is excellent in workability and is cheap with high quality, and an intermediate product thereof.

**Claims**

1.  A flame-resistant fiber bundle configured by a single fiber group having a single-fiber fineness of 0.8 dTex to 5.0 dTex, wherein an average density of a single fiber is 1.33 g/cm$^3$ to 1.43 g/cm$^3$, and a variation coefficient CV of the density in the fiber bundle is 0.2% or less.

2.  The flame-resistant fiber bundle according to claim 1, the fiber bundle configured by a group of single fibers each having a kidney-type cross-sectional shape in which a length of major axis a is 10 $\mu$m to 32 $\mu$m, a length of minor axis b is 6 $\mu$m to 20 $\mu$m, a groove depth c is 0.1 $\mu$m to 3.0 $\mu$m, and an aspect ratio a/b is 1.3 to 1.8.

3.  The flame-resistant fiber bundle according to claim 1, wherein a degree of orientation $\pi$ ($2\theta = 25°$ peak), which is obtainable by wide-angle X-ray analysis, is 68% to 74%, a ratio "A/S $\times$ 100%" of an area A at the spectrum peak in the vicinity of 135 ppm, which is obtainable by solid state $^{13}$C-NMR, to the whole spectrum area S is 14% to 17%.

4.  A carbon fiber bundle configured by a group of carbon fibers each having a kidney-type cross-sectional shape in which a length of major axis a is 5 $\mu$m to 16 $\mu$m, a length of minor axis b is 3 $\mu$m to 10 $\mu$m, a groove depth c is 0.70 $\mu$m to 3 $\mu$m, and an aspect ratio a/b is 1.3 to 1.8.

5.  A process for producing a flame-resistant fiber bundle, the process comprising a step in which a flame-resistant fiber bundle (1) having a single-fiber density $\rho_{F1}$ of 1.26 g/cm$^3$ to 1.36 g/cm$^3$ is brought into contact sequentially with a heater group having a surface temperature $T_H$ of 240°C to 400°C under the following conditions (A), (B), and (C) to obtain a flame-resistant fiber bundle (2) having a single-fiber density $\rho_{F2}$ of 1.33 g/cm$^3$ to 1.43 g/cm$^3$:

    [(A) when the surface temperature of the heater $H_n$ with which the fiber bundle is brought into contact "n"-thly is designated as $T_{Hn}$ (°C), and the surface temperature of the heater $H_{n+1}$ with which the fiber bundle is brought into contact "n+1"-thly is designated as $T_{Hn+1}$ (°C), the expression "$T_{Hn} < T_{Hn+1}$" is established, with the proviso that n is an integer of 1 or more;
    (B) the total contact time between the fiber bundle and the heater group is 10 seconds to 360 seconds; and
    (C) the contact time between the fiber bundle and each heater is 2 seconds to 20 seconds].

6.  The process for producing a flame-resistant fiber bundle according to claim 5, wherein a flame-resistant fiber bundle obtained by heating a carbon-fiber-precursor acrylic fiber bundle in an oxidizing atmosphere having a temperature of 200°C to 300°C for 25 minutes or longer is used as the flame-resistant fiber bundle (1).

7.  The process for producing a flame-resistant fiber bundle according to claim 5 or 6, wherein, in the step of obtaining the flame-resistant fiber bundle (2), a numerical value of a surface temperature $T_{H1}$ (°C) of the heater with which the fiber bundle is brought into contact firstly and a numerical value of a contact time $t_1$ (sec) between the fiber bundle and the heater satisfy the following expression (1).

$$T_{H1} \leq 420 - 7 \times t_1 \cdots (1)$$

8.  The process for producing a flame-resistant fiber bundle according to claim 5 or 6, wherein the heater group is a heating roll.

**9.** The process for producing a flame-resistant fiber bundle according to claim 8,
wherein, in the step of obtaining the flame-resistant fiber bundle (2), a ratio "$V_L/V_1$" of a rotation speed $V_1$ of the heating roll with which the fiber bundle is brought into contact firstly to a rotation speed $V_L$ of the heating roll with which the fiber bundle is brought into contact lastly is 1.01 to 1.20.

**10.** The process for producing a flame-resistant fiber bundle according to claim 8,
wherein the tension of the fiber bundle between the "n"-th heating roll and the "n+1"-th heating roll is 0.05 cN/dTex or more.

**11.** The process for producing a flame-resistant fiber bundle according to claim 5 or 6,
wherein, in the step of obtaining the flame-resistant fiber bundle (2), the fiber bundle which has passed through the heater $H_n$ having a surface temperature of $T_{Hn}$ (°C) is brought into contact with gas having a temperature $T_G$ (°C) satisfying the condition of the following expression (3).

$$100 \leq T_{Hn} - T_G \cdots (3)$$

**12.** The process for producing a flame-resistant fiber bundle according to claim 5 or 6,
wherein air is introduced into a oxidation oven from the lower position in relation to the installation position of each heater of the heater group installed in the oxidation oven.

**13.** The process for producing a flame-resistant fiber bundle according to claim 5 or 6,
wherein a numerical value of the single-fiber density $\rho_{F1}$ (g/cm$^3$) and a numerical value of the contact time $t_1$ (sec) satisfy the following expression (4).

$$1.8 \leq (\rho_{F1} - 1.21) \times t_1 \leq 7.2 \cdots (4)$$

**14.** The process for producing a flame-resistant fiber bundle according to claim 5 or 6,
wherein the surface temperature $T_{H1}$ is 240°C to 320°C.

**15.** The process for producing a flame-resistant fiber bundle according to claim 5 or 6,
wherein a surface temperature $T_{HL}$ of the heater with which the fiber bundle is brought into contact lastly is 330°C to 400°C.

**16.** The process for producing a flame-resistant fiber bundle according to claim 5 or 6,
wherein, in the step of obtaining the flame-resistant fiber bundle (2), the surface temperature $T_{HL}$ of the heater with which the fiber bundle is brought into contact lastly is 280°C to 330°C, and a step in which the flame-resistant fiber bundle (2) is heated in an oxidizing atmosphere having a temperature of 250°C to 300°C to obtain a flame-resistant fiber bundle (3) having a single-fiber density $\rho_{F3}$ of 1.35 g/cm$^3$ to 1.43 g/cm$^3$ is included after the step of obtaining the flame-resistant fiber bundle (2).

**17.** The process for producing a flame-resistant fiber bundle according to claim 5 or 6,
wherein the step of obtaining the flame-resistant fiber bundle (2) includes the following three steps:

(1) a step in which the single-fiber density of the flame-resistant fiber bundle is adjusted to 1.30 to 1.38 g/cm$^3$ by oxidation treatment using a heater group 1 having a surface temperature of 240°C to 290°C;
(2) a step performed subsequent to the step (1) in which the single-fiber density of the flame-resistant fiber bundle is adjusted to 1.32 g/cm$^3$ to 1.40 g/cm$^3$ by oxidation treatment using a heater group 2 having a surface temperature of 260°C to 330°C; and
(3) a step performed subsequent to the step (2) in which the single-fiber density of the flame-resistant fiber bundle is adjusted to 1.34 g/cm$^3$ to 1.42 g/cm$^3$ by oxidation treatment using a heater group 3 having a surface temperature of 280°C to 400°C.

**18.** The process for producing a flame-resistant fiber bundle according to claim 5 or 6,
wherein the single-fiber fineness of the acrylic precursor fiber bundle is 0.8 dTex to 5.0 dTex and the total fineness is 3,000 dTex to 100,000 dTex.

**19.** A process for producing a carbon fiber bundle, the process comprising a step in which the flame-resistant fiber bundle (2) obtained by the process for producing a flame-resistant fiber bundle according to claim 5 or 6 is heated in an inert atmosphere having a highest temperature of 1200°C to 2000°C.

**20.** A process for producing a carbon fiber bundle, the process comprising a step in which the flame-resistant fiber bundle (3) obtained by the process for producing a flame-resistant fiber bundle according to claim 16 is heated in an inert atmosphere having a highest temperature of 1200°C to 2000°C.

DEFINITION OF PARAMETERS OF KIDNEY CROSS-SECTIONAL SHAPE

LENGTH OF MAJOR AXIS: a

LENGTH OF MINOR AXIS: b

GROOVE DEPTH: c

ASPECT RATIO: a/b

# FIG. 1

FIG. 2

SOLID STATE¹³C-NMR SPECTRUM

# FIG. 3

## INTERNATIONAL SEARCH REPORT

| International application No. |
| --- |
| PCT/JP2012/083741 |

A.  CLASSIFICATION OF SUBJECT MATTER
*D01F9/22*(2006.01)i

According to International Patent Classification (IPC) or to both national classification and IPC

B.  FIELDS SEARCHED

Minimum documentation searched (classification system followed by classification symbols)
D01F9/08-9/32

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | WO 2012/050171 A1  (Mitsubishi Rayon Co., Ltd.),<br>19 April 2012 (19.04.2012),<br>paragraphs [0125] to [0128], [0199], [0209] to [0216]<br>& TW 201226648 A | 4<br>1-3 |
| A | JP 61-167023 A  (Asahi Chemical Industry Co., Ltd.),<br>28 July 1986 (28.07.1986),<br>claims<br>(Family: none) | 1-3,5-20 |
| A | JP 61-174423 A  (Asahi Chemical Industry Co., Ltd.),<br>06 August 1986 (06.08.1986),<br>example 2<br>(Family: none) | 5-20 |

☒    Further documents are listed in the continuation of Box C.       ☐       See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 March, 2013 (04.03.13) | 12 March, 2013 (12.03.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/083741

C (Continuation).    DOCUMENTS CONSIDERED TO BE RELEVANT

| Category* | Citation of document, with indication, where appropriate, of the relevant passages | Relevant to claim No. |
|---|---|---|
| A | WO 1987/002391 A1  (Mitsubishi Rayon Co., Ltd.), 23 April 1987 (23.04.1987), claims & EP 242401 A1 claims & JP 62-215018 A          & JP 62-257424 A & JP 62-85032 A          & JP 62-110924 A & US 4780301 A            & DE 3686715 A & DE 3686715 T            & DE 3686715 D & KR 10-1989-0005273 B | 5-20 |
| E,X E,A | JP 2012-255235 A  (Mitsubishi Rayon Co., Ltd.), 27 December 2012 (27.12.2012), claims; examples (Family: none) | 1,3,5-20 2 |

Form PCT/ISA/210 (continuation of second sheet) (July 2009)

**INTERNATIONAL SEARCH REPORT**

International application No.

PCT/JP2012/083741

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    (Invention 1) the inventions of claims 1-3
    A flame-resistant fiber bundle in which the single-fiber fineness, the average density of the single fibers, and the coefficient of variation (CV) in density within the fiber bundle have been specified
    (Invention 2) the invention of claim 4
    The carbon fiber bundle which comprises carbon fibers that have a specific kidney-shaped cross-section
    (Invention 3) the inventions of claims 5-20
    A process for producing a flame-resistant fiber bundle which includes a specific step

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 905 364 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59030914 A
- JP 61167023 A